(19) Europäisches Patentamt
European Patent Office
Office européen des brevets

(11) EP 4 723 610 A1

(12) EUROPEAN PATENT APPLICATION

(43) Date of publication:
08.04.2026 Bulletin 2026/15

(21) Application number: 25206012.4

(22) Date of filing: 01.10.2025

(51) International Patent Classification (IPC):
H04N 1/00 (2006.01)     B41J 29/38 (2006.01)

(52) Cooperative Patent Classification (CPC):
H04N 1/00204; B41J 29/38; B41J 29/393;
H04N 1/00896; H04N 1/00899; H04N 1/00907

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 07.10.2024 JP 2024176085
29.10.2024 JP 2024190175
21.05.2025 JP 2025085071

(71) Applicant: Canon Kabushiki Kaisha
Tokyo, 146-8501 (JP)

(72) Inventors:
• IKEDA, Tohru
Tokyo (JP)
• YAMADA, Akitoshi
Tokyo (JP)
• OONUKI, Kenichi
Tokyo (JP)
• KATO, Masao
Tokyo (JP)
• NAKATANI, Akihiko
Tokyo (JP)

(74) Representative: WESER & Kollegen
Patentanwälte PartmbB
Radeckestraße 43
81245 München (DE)

(54) **PRINTING APPARATUS AND METHOD OF CONTROLLING THE SAME**

(57) A printing apparatus operable by receiving power supply from a device connected via a wired connection, the printing apparatus determines a power supply level of the power supply, sets a printing mode based on the determined power supply level, and controls printing based on the set printing mode.

**F I G. 5**

```
                    START

        DETERMINE USB STANDARD          ~ S501

       SET THRESHOLD FOR Vbat VOLTAGE   ~ S502

          DETECT Vbat VOLTAGE           ~ S503

                                    S504
              Vbat VOLTAGE >              NO
              THRESHOLD 1?
                    YES
                                    S505                      S509
     DISPLAY UI FOR SELECTING PRINTING         NOTIFY OF INSUFFICIENT POWER
     MODE AND ACCEPT USER INPUT

          SET PRINTING MODE             ~ S506

       EXECUTE SET PRINT PROCESS        ~ S507

         PRINT END OPERATION            ~ S508

                     END
```

EP 4 723 610 A1

## Description

TECHNICAL FIELD

The present disclosure relates to a printing apparatus and a method of controlling the same.

BACKGROUND

Conventionally, printing apparatuses that operate only on power supplied from a Universal Serial Bus (USB) interface (hereinafter referred to as USB power) have been proposed.

Japanese Patent Laid-Open No. 2004-34455 describes a printer apparatus operable by power supplied from an AC power supply and power supplied by a wired connection with an external device. Wired connections to common external devices use standard interfaces for transmitting and receiving data, including USB connections. The printer apparatus of Japanese Patent Laid-Open No. 2004-34455 is characterized by switching the printing mode between operation by power supply from the USB and operation by power supply from a main power supply. In particular, it is described that in the case of operation by power supply from the USB, the number of discharge nozzles driven in the printer apparatus is limited, and the frequency of the operation clock is lowered as part of a low power consumption mode.

Further, Japanese Patent Laid-Open No. 2003-251893 describes a printing apparatus that is operable by receiving power supply from a battery and is capable of being connected by a plurality of interfaces, and describes that by switching the interface connection with high power consumption among the plurality of interfaces to a disabled state when the remaining battery level is low, the printing apparatus can prevent entering an error state even when the remaining battery level is low.

Further, Japanese Patent Laid-Open No. 2023-45997 describes having a plurality of power supplies, including a battery and a first power supply for supplying power based on power from a commercial power supply, and in a state where power is being supplied from the first power supply, obtaining information regarding the amount of voltage drop to be supplied to a printing head based on the impedance of a circuit to which power is supplied from the first power source and the current value of the print head, and driving the printing head based on the information.

SUMMARY

However, the printer apparatus of the above Japanese Patent Laid-Open No. 2004-34455 is powered either from an AC main power supply or via a USB connection. In addition, in the case of power supply from the USB, power consumption is reduced by a method in which the frequency of the operation clock is reduced and the number of discharge nozzles driven is further limited as part of a low power consumption mode. Therefore, there is a problem that when power is supplied from the USB, not only does the printing speed become slower, but also the number of dots on the paper surface decreases, leading to a reduction in image density and consequently a decline in the visibility of the printed matter.

In Japanese Patent Laid-Open No. 2003-251893, the interfaces with high power consumption among a plurality of interfaces are disabled depending on the battery state. In recent years, printer apparatuses that only have a USB and a LAN as interfaces have become common, and there has been a problem where if an interface is disabled, communication with a host computer becomes impossible.

In Japanese Patent Laid-Open No. 2023-45997, the determination of the power supply state is a determination of a battery or a commercial power supply, and control such as head driving that corresponds to the power supply state via an I/F, as in the case of a USB connection, is not possible.

Embodiments of the present disclosure eliminate the above-mentioned issues with conventional technology.

A feature of embodiments of the present disclosure is to provide a technique that makes it possible to set a printing mode based on information on power supplied via an interface while connected by a wire via the interface.

The present disclosure in its first aspect provides a printing apparatus as specified in claim 1. Optional features are specified in claim 2 to 28.

The present disclosure in its second aspect provides a method of controlling a printing apparatus as specified in claim 29. Optional features are specified in claim 30.

Further features of the various embodiments will become apparent from the following description of embodiments with reference to the attached drawings. The following description of embodiments are described by way of example.

BRIEF DESCRIPTION OF THE DRAWINGS

The accompanying drawings, which are incorporated in and constitute a part of the specification, illustrate embodiments of the disclosure and, together with the description, serve to explain the principles of the disclosure.

FIG. 1A depicts an overall perspective view of a printing apparatus according to a first embodiment.

FIG. 1B is a block diagram for describing an example of a hardware configuration of the printing apparatus according to the first embodiment of the present disclosure.

FIG. 2 is a block diagram for describing a power supply system for power supplied from a USB in the printing apparatus according to the first embodiment.

FIG. 3 is a diagram illustrating an example of a power supply amount for each USB standard.

FIG. 4A is a diagram for determining a Vbat voltage threshold that corresponds to a USB power supply amount.

FIG. 4B is a diagram illustrating an example of a printing mode corresponding to a Vbat voltage and a USB power supply amount.

FIG. 5 is a flowchart for explaining processing when the printing apparatus according to the first embodiment receives power supply via a wired connection and executes printing.

FIG. 6 is a flowchart for explaining an overview of processing in a print process executed by the printing apparatus according to the first embodiment.

FIGS. 7A and 7B are conceptual diagrams for explaining control of printing speed and image density corresponding to respective printing modes according to the first embodiment.

FIG. 8 depicts a view illustrating an example of screens that request input for a print operation that a user wishes to prioritize in step S505 of FIG. 5.

FIG. 9 depicts a view illustrating an example of a screen transition at the time of initial installation of the printing apparatus according to a second embodiment.

FIG. 10 is a flowchart for explaining processing when the printing apparatus according to the second embodiment receives power supply via a wired connection and executes printing.

FIG. 11 is a diagram for describing a capping operation.

FIGS. 12A to 12D are conceptual diagrams for explaining control of printing speed and image density corresponding to respective printing modes according to a third embodiment.

FIG. 13 is a diagram illustrating an example of printing mode 2 and printing mode 3 in which both image density reduction and printing speed reduction are executed in a modification of an embodiment.

FIG. 14 is a flowchart for explaining processing for determining a printing mode in accordance with the power supply state in the printing apparatus according to the third embodiment.

FIG. 15 is a diagram illustrating an example of switching dot arrangement control, which is determined by a Vbat voltage and the amount of power supplied from the USB, according to a fourth embodiment.

FIG. 16 is a flowchart for explaining processing when the printing apparatus according to the fourth embodiment receives power supply via a wired connection and executes printing.

FIG. 17 is a flowchart for explaining an overview of processing in a print process executed by the printing apparatus according to the fourth embodiment.

FIG. 18 is a diagram for describing detailed control of dot arrangement control methods 1 to 4, which are referenced in relation to the power supply amount in dot arrangement control setting of step S1601 in FIG. 16.

FIG. 19 is a diagram illustrating an example of dot arrangement when the respective color printing duties of C ink and M ink are 25% in the fourth embodiment.

FIG. 20 is a diagram illustrating an example of dot arrangement when the respective color printing duties of C ink and M ink are 50% in the fourth embodiment.

FIGS. 21A and 21B are diagrams illustrating an example of counting a total number of pixels in 8 pixels × 8 pixels for each number of printed dots under the respective conditions of FIGS. 19 and 20.

FIG. 22 is a diagram for explaining an image characteristic provided by dot arrangement according to the fourth embodiment.

FIGS. 23A to 23C are diagrams for explaining "dispersibility of dot arrangement" according to the fourth embodiment.

FIG. 24A is a block diagram for describing a quantization process including a preprocess according to a fifth embodiment.

FIG. 24B is a flowchart for explaining steps of a quantization process according to the fifth embodiment.

FIG. 25 is a diagram for describing a quantization method according to the fifth embodiment in detail.

FIG. 26 depicts a view illustrating an example of a dot rendering method according to a sixth embodiment.

FIG. 27 depicts a view illustrating an example of a threshold matrix used for dither processing according to the fourth embodiment.

FIG. 28 depicts a view illustrating examples of dither matrices for realizing the dot arrangement of FIGS. 19 and 20.

## DESCRIPTION OF THE EMBODIMENTS

Example embodiments of the present disclosure will be described hereinafter in detail, with reference to the accompanying drawings. It is to be understood that the following embodiments are not intended to limit the claims of the present disclosure, and that not all of the combinations of the aspects that are described according to the following embodiments are necessarily required with respect to the means to solve the issues according to the present disclosure. Further, in the accompanying drawings, the same or similar configurations are assigned the same reference numerals, and redundant descriptions are omitted.

First, the terms used in the present embodiment will be defined in advance as follows.

• "Recording"

In this specification, "recording" is not only forming significant information such as letters and shapes. The significance or insignificance is irrelevant, as is whether visual perception by humans is possible. It refers to forming (printing) images, designs, patterns, and the like broadly on a print medium, as well as processing the medium.

• "Print Media"

Print media refers not only to paper used in general printing apparatuses, but also broadly to those that can receive ink, such as cloth, plastic films, metal plates, glass, ceramics, wood, and leather.

• "Ink"

Ink is to be interpreted broadly, similar to the definition of "recording" above, and refers to a medium that includes a printing agent which, by being applied to a print medium, forms images, designs, patterns, and the like, or which may be supplied in processing of a print medium, or processing of ink. In terms of physical properties, it is a liquid. The above ink processing is, for example, coagulation or insolubilization of a colorant in an ink applied to a print medium.

• "Nozzle"

Unless otherwise specified, "nozzle" refers to a discharge port. Inside the nozzle, there are communicating liquid paths and an element that generates energy used for ink discharge.

• "Scanning"

In order to perform recording on a print medium, a print head scans over the print medium and performs recording. Here, the movement of the print head during acceleration and deceleration of the print head for or related to recording is referred to as scanning.

• "Reciprocal recording"

Reciprocal recording refers to performing recording while performing a reciprocal operation of the above "recording" or "scanning" over the paper surface. Reciprocal scanning, reciprocal recording, bidirectional scanning, and bidirectional recording also refer to similar things.

[First Embodiment]

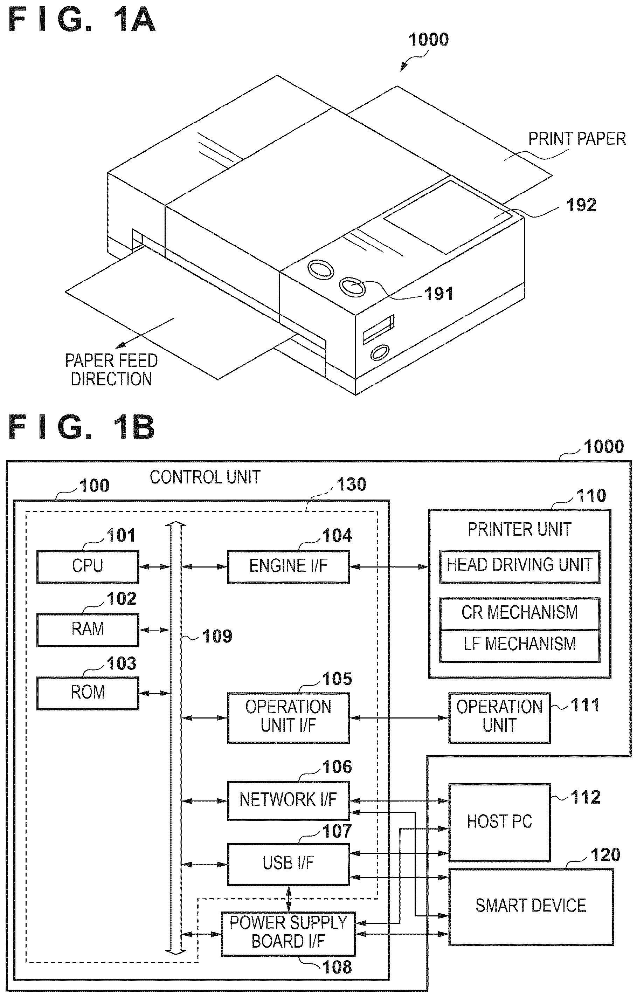

FIGS. 1A and 1B are diagrams for describing an example of a hardware configuration of a printing apparatus 1000 according to a first embodiment of the present disclosure.
FIG. 1A depicts an overall perspective view of the printing apparatus according to the first embodiment of the present disclosure.
An operation unit 111 to be operated by a user is provided with a display unit 192 such as a liquid crystal panel and an operation key 191 to be operated by the user. Although, in the present embodiment, the operation unit includes a liquid crystal panel and hardware keys, it may be a touch panel.
FIG. 1B is a block diagram for describing an example of a hardware configuration of the printing apparatus 1000 according to the first embodiment of the present disclosure.
The printing apparatus 1000 roughly includes a control unit 100, a printer unit 110, and an operation unit 111. In the control unit 100, a Central Processing Unit (CPU) 101 deploys a control program recorded in a Read Only Memory (ROM) 103 into a Random Access Memory (RAM) 102, and reads the program when necessary to perform various kinds of control such as power-on control and recording control. The RAM 102 is a main storage memory of the CPU 101, and is used as a work area and as a temporary storage region for deploying various programs stored the ROM 103. The ROM 103 stores image data, various programs, and various kinds of setting information. In the first embodiment, a flash storage or the like is assumed as the ROM 103, but an auxiliary storage apparatus such as a hard disk may also be used. In the printing apparatus 1000, it is assumed that one CPU 101 executes respective processes indicated in flowcharts described later using one memory (RAM 102), but another form may also be taken. For example, a plurality of CPUs and a plurality of RAMs, ROMs and storages may cooperate to execute the respective processes illustrated in the flowcharts described later. A hardware circuit may also be used to execute some of the processes executed by the CPU 101. An engine interface 104 connects the printer unit 110 and the control unit 100. Interfaces are indicated as I/F below. Image data to be recorded by the printer unit 110 is transferred from the control unit 100 via the engine I/F 104 and recorded (printed) on print paper in the printer unit 110.

Since an inkjet printing apparatus is assumed in the first embodiment, the printer unit 110 includes a head driving unit that drives an inkjet head and a carriage (CR) driving unit that scans and drives a carriage on which the inkjet head is mounted. The printer unit 110 further includes a conveyance driving unit (LF driving unit) that conveys and drives a print sheet, which is a print medium.

An operation unit I/F 105 connects the operation unit 111 and the control unit 100. The operation unit 111 includes the display unit 192 having a touch panel function, the operation key 191, and the like, and functions as an acceptance unit that accepts instructions from the user and a presentation unit that presents various kinds of information to the user. The operation unit 111 may further include an operation button (not illustrated), an LED, and the like. A network I/F 106 and a USB I/F 107 each control communication with a host computer (PC) 112 connected to the printing apparatus 1000.

In addition, USB Type-C has been proposed as an interface standard for smart devices and the like in recent years, and power can be supplied via this interface in addition to communication. Since power supply via USB Type-C is assumed at the time of this connection, the printing apparatus 1000may be capable of operating without connection to AC power supply, which is the main power supply.

In the first embodiment, the printing apparatus 1000 may be connected to the host computer (host PC) 112 via not only the network I/F 106 but also the USB Type-C USB I/F 107. Not only the host PC 112 but a smart device 120 and a mobile battery may also be connected via the USB I/F 107. When a device is connected via USB Type-C, power is supplied to the printing apparatus 1000 from the device. Further, a power supply board I/F 108 is connected to a main power supply board, which is connected to AC input and supplies power to the inside of the printing apparatus 1000, and may be provided with a storage battery (battery) capable of storing power. The above respective elements included in the control unit 100 are connected via a bus 109 to be capable of communication.

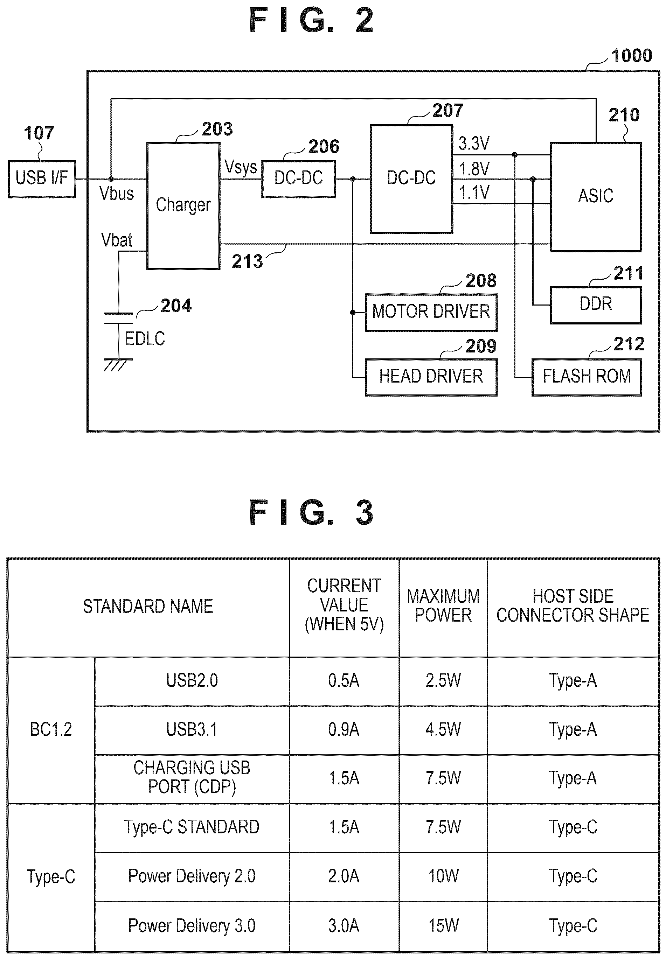

FIG. 2 is a block diagram for describing a configuration of a power supply board unit 130 of FIG. 1B, which is a power supply system for power supplied from the USB in the printing apparatus 1000 according to the first embodiment.

The printing apparatus 1000 can be driven by a power supply Vbat from an Electric Double Layer Capacitor (EDLC) 204 being supplied to a Charger IC 203. That is, power control of the printing apparatus 1000 is performed by power supply via the Charger IC 203. The Charger IC 203 charges the EDLC 204 using a current supplied via a power supply Vbus from the USB I/F 107, which connects to an external battery and the smart device 120. At the same time, the Charger IC 203 outputs a voltage to a DC-DC (booster circuit) 206 by power supplied from the EDLC 204. The DC-DC 206 is a booster circuit for boosting the voltage from the Charger IC 203. The voltage boosted by the DC-DC 206 is used by a motor driver 208 to drive the motors of a reading mechanism and a printing mechanism. The voltage boosted by the DC-DC 206 is also used by the head driver 209 as a drive power supply for the print head. Thus, the voltage boosted by the DC-DC 206 is responsible for driving relatively large loads.

The voltage boosted by the DC-DC 206 is further supplied to a DC-DC (step-down circuit) 207, and the DC-DC 207 generates logic power supply voltages used in an ASIC 210, a flash ROM 212, a DDR (SDRAM) 211, and the like. Here, the ASIC 210 is a custom IC that includes a CPU and a peripheral circuit. The Charger IC 203 is an IC with functions for controlling an input current of the USB I/F 107 and controlling the charging of the EDLC 204, and protecting against abnormal operation. The Charger IC 203 also communicates with the ASIC 210 connected via a control serial bus 213. The Charger IC 203 also determines an input current that matches an external device from which power is supplied. In the first embodiment, the Charger IC 203 performs a determination (hereinafter, BC determination) that conforms to a USB Battery Charging (USB BC) standard. Further, a determination that conforms to USB Power Delivery (USB PD) standard (hereinafter, CC determination) is performed.

Upon receiving results of BC determination and CC determination via the control serial bus 213 from the Charger IC 203, the ASIC 210 determines thresholds for a charge current, a full charge, and an overdischarge voltage of the Charger IC 203, and sets the thresholds in the Charger IC 203. The Charger IC 203 controls charging of the EDLC 204 and supplies power from the EDLC 204 to the DC-DC 206, the motor driver 208, and the head driver 209 via the power supply Vbat in accordance with an instruction from the ASIC 210. The voltage of the power supply Vbat from the EDLC 204 can be transmitted from the Charger IC 203 to the ASIC 210. In addition, various kinds of information related to power supply can be transmitted from the Charger IC 203 to the ASIC 210. The ASIC 210 can execute various kinds of control of the printing apparatus 1000 by using these pieces of information. For example, if the voltage of the power supply Vbat of the EDLC 204 drops at the time of a print operation of the printing apparatus 1000, the ASIC 210 stops the print operation, and then, outputs an instruction to the Charger IC 203 to perform charge control until the voltage of the power supply Vbat of the EDLC 204 reaches a certain threshold. Upon receiving that the voltage of the power supply Vbat has reached a certain threshold, the ASIC 210 can perform control for restarting the print operation.

Further, since an inkjet discharge mechanism is configured to discharge small droplets from fine nozzles, it is necessary keep the discharge mechanism unit moisturized and to cap the nozzles in a stopped state other than an operating state to avoid discharge failure at the time of next printing due to ink drying. Therefore, when stopping the print operation, it can be determined that the power for driving the mechanism until capping is sufficient as long as the voltage of the power supply Vbat exceeds the threshold. Accordingly, it is possible to complete the capping of the print head using the power supplied from the power supply Vbat.

Further, if the USB cable is disconnected or power supply is stopped for any reason while operating with power supplied from the USB I/F 107, for example, the Charger IC 203 notifies the ASIC 210. With this notification, it is possible to perform control for immediately performing an operation corresponding to a power supply stop, that is, to start capping, and once capping is completed, to terminate the job as a whole.

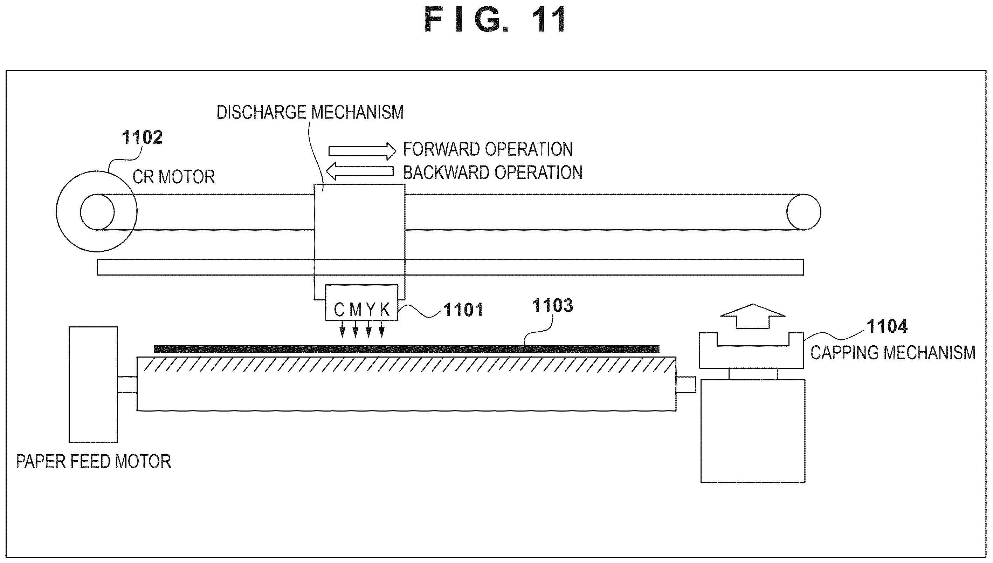

FIG. 11 is a diagram for describing a capping operation.

An ink droplet discharge mechanism unit 1101 of the inkjet printing apparatus is mounted on the carriage, and printing is performed by discharging ink droplets while the carriage reciprocally scans across a paper surface 1103 in accordance with the rotation of a CR motor 1102. When the print job is completed, or at a timing at which a predetermined period or a predetermined number of reciprocations is satisfied, the discharge mechanism unit 1101 is moved to a capping mechanism unit 1104. Then, the capping mechanism unit 1104 rises and caps the discharge mechanism unit 1101 to retain moisture. If there is no print job to be executed, it ends there.

FIG. 3 is a diagram illustrating an example of a power supply amount for each USB standard.

BC 1.2 is based on the USB Battery Charge (BC) standard, and a method for electrical determination that uses D+ and D- signal lines for USB data communication has been defined as a method for determining a charging USB port (CDP). Further, in the case of a standard USB port that is not a charging port, communication based on a USB standard is performed after this detection is completed, during which the USB version can be determined. Meanwhile, in USB Type-C, the Power Delivery standard is defined, and a power supply amount can be notified by communication via a Configuration Channel (CC) pin. In the Power Delivery standard, the supplied power supply voltage can be controlled from 5 V to 48 V, but in FIG. 3, the maximum power is indicated as the value when supplying 5 V.

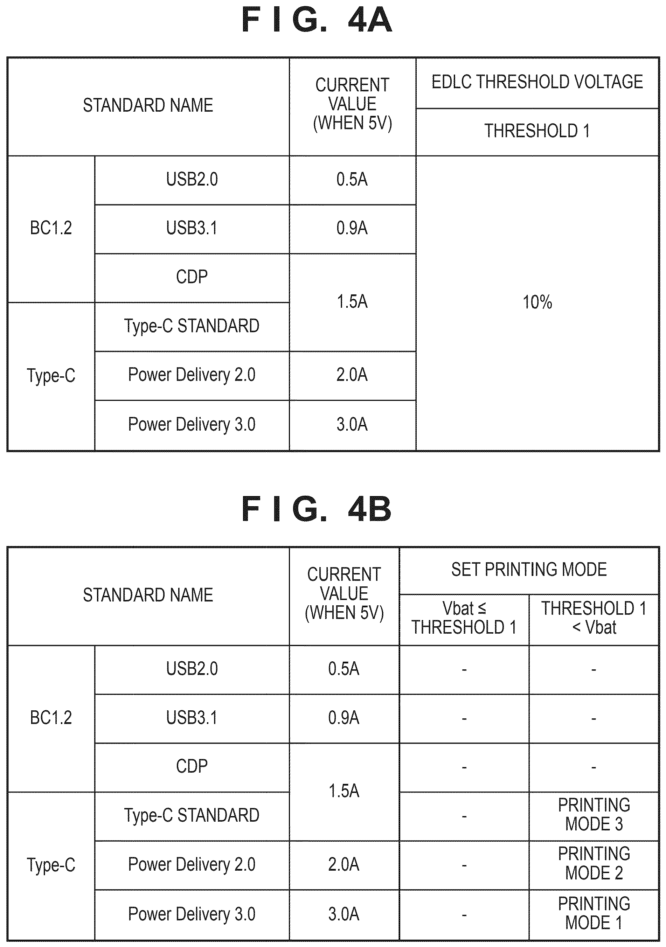

FIG. 4A is a diagram for determining a Vbat voltage threshold that corresponds to a USB power supply amount. Regarding a reference for setting a threshold for the Vbat voltage, for example, threshold 1 is a voltage threshold at which the capping operation can be performed using only the remaining power of the EDLC 204, even if power supply from the USB is stopped.

FIG. 4B is a diagram illustrating an example of a settable printing mode in association with a Vbat voltage and the amount of power supplied from the USB.

The printing mode can range from printing mode 1, for when there is sufficient supplied power, to printing mode 3, in stages as the supplied power decreases. The content of FIG. 4B, which indicates the association between USB power supply amount, Vbat voltage, and printing mode, may be held as table data in the ROM 103 or may be implemented as determination code for program code.

In the example of FIG. 4B, when the voltage value of the power supply Vbat from the EDLC 204 is less than or equal to threshold 1, the remaining power of the EDLC 204 is insufficient, and therefore, the printing mode is not set. If the voltage value of the power supply Vbat from the EDLC 204 is greater than threshold 1, the printing mode is set in accordance with the USB Type-C standard. Here, in the case of a Power Delivery 3.0 connection in which the amount of power supplied from the USB is the highest, printing mode 1 is set. Further, in the case of a Power Delivery 2.0 connection, printing mode 2 is set, and in the case of the USB Type-C standard, printing mode 3 is set.

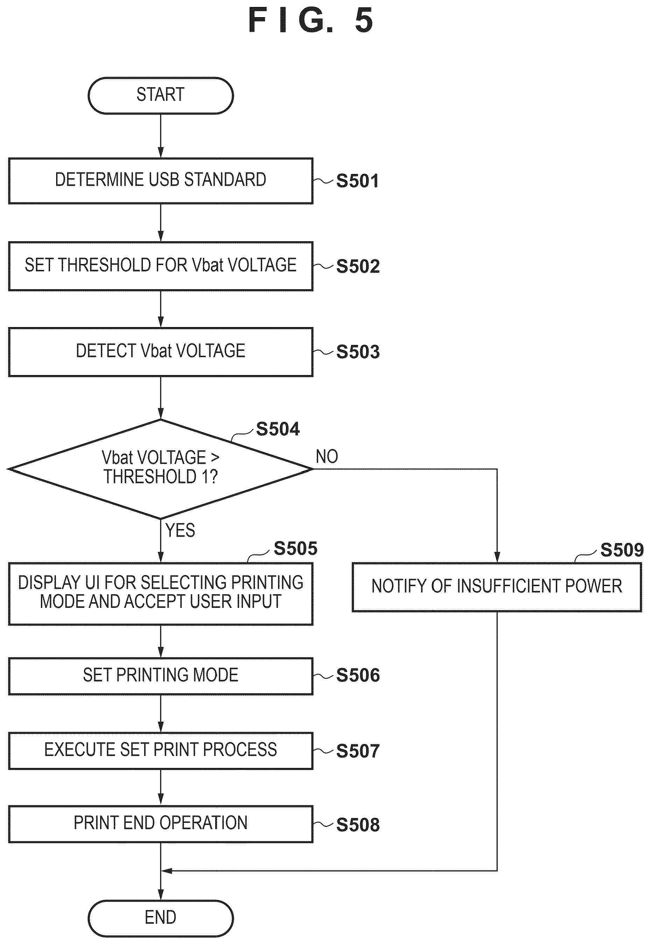

FIG. 5 is a flowchart for explaining processing when the printing apparatus 1000 according to the first embodiment receives power supply via a wired connection and executes printing. This processing starts, for example, by a USB device being inserted into the USB I/F 107 of the printing apparatus 1000.

First, in step S501, the ASIC 210 determines the interface standard of the inserted USB device. Next, the processing proceeds to step S502, and the ASIC 210 references FIG. 4A based on the result of determination of step S501, and sets a threshold for the Vbat voltage. Then, the processing proceeds to step S503, and the ASIC 210 detects the Vbat voltage via the Charger IC 203. As described above, the Vbat voltage is supplied from the EDLC 204, and when an external device is connected via the interface, the EDLC 204 is constantly charged by the voltage supplied from the interface. Thus, the Vbat voltage represents a power supply level indicating the state of power supply via the interface.

Next, the processing proceeds to step S504, and the ASIC 210 compares the Vbat voltage detected in step S503 with threshold 1 set in step S502. Here, if the Vbat voltage is less than or equal to threshold 1, the processing proceeds to step S509, and the ASIC 210 notifies the user of the insufficient remaining power and the start of charging, and ends the process.

Meanwhile, in step S504, if it is determined that the Vbat voltage is greater than threshold 1, the processing proceeds to step S505, and the ASIC 210 display a UI to determine the printing mode based on the USB standard determined in step S501 and the Vbat voltage in accordance with FIG. 4B. In the example of FIG. 4B, in the case of a Power Delivery 3.0 connection via a USB Type-C connection, printing mode 1 is able to be selected. Further, the example is such that in the case of a Power Delivery 2.0 connection, printing mode 2 is able to be selected, and in the case of a Type-C standard connection, printing mode 3 is able to be selected. However, it may be made possible to, in the case of a Power Delivery 2.0 connection, select either printing mode 2 or printing mode 3. Further, it may be made possible to, in the case of a Type-C standard connection, select either printing mode 2 or printing mode 3. That is, if it is deemed that operation is possible in both printing mode 2 and printing mode 3 in a state in which supplied power is limited compared to the reference Power Delivery 3.0 connection, then either may be selected. Therefore, in step S505, selectable printing modes are displayed in accordance with the result of comparison between the Vbat voltage and threshold 1, allowing the user to select a desired printing mode from among the displayed printing modes. In addition, in step S505, a printing mode corresponding to power supply, the appearance of a print image based on the printing mode, and the contents of a priority mode that has already been set may be displayed, and the user may then be prompted to make a selection of the printing mode. Further, a selection button or the like related to whether setting of the printing mode is necessary may be displayed, and if that selection button is operated, the processing may transition to a setting process of step S506.

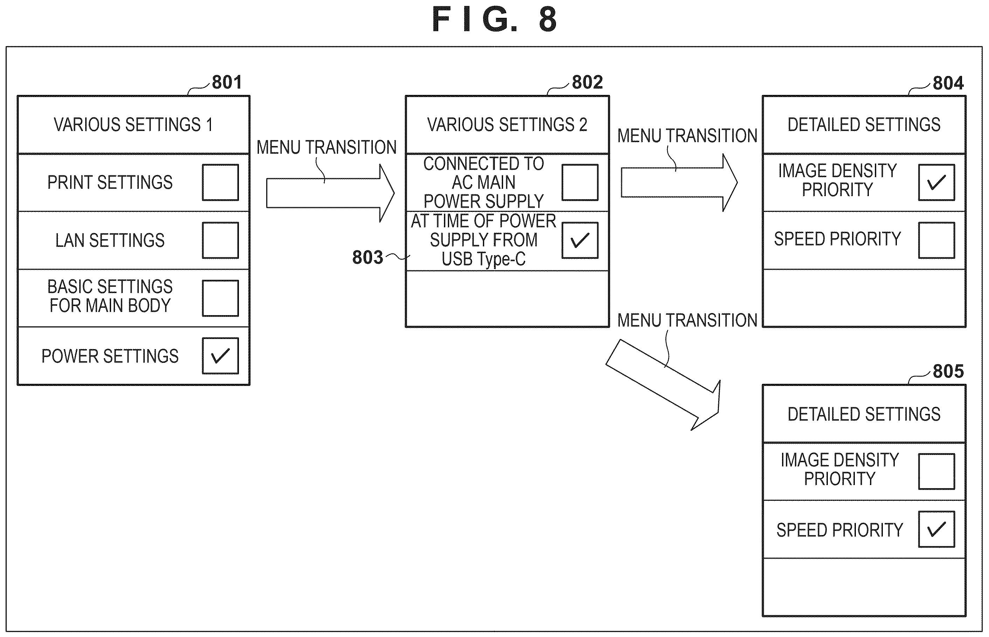

FIG. 8 depicts a view illustrating an example of screens (hereinafter, UI screens) that request input for a print operation that a user wishes to prioritize in step S505. These UI screens are displayed on the display unit of the operation unit 111, and the selection of a respective item is performed by a touch operation on the display unit or by using a physical key and the like of the operation unit 111.

A first screen 801 for various settings 1 displays a state in which an item for power settings related to the first embodiment is checked, and from there, detailed various settings related to power settings can be displayed in a deeper hierarchy in a list scroll type display. In a second screen 802 for various settings 2, an item 803 for USB Type-C power supply is also shown in addition to the menu to be set when connected to a normal AC main power supply. In the first embodiment, processing when the item 803 for USB Type-C power supply is selected as shown in the second screen 802 is a characteristic feature. When the item 803 for USB Type-C power supply is selected, a detailed setting screen 804 or a detailed setting screen 805 in which more detailed settings can be made is displayed in a deeper hierarchical UI. The selection of a priority mode that the user desires can be set in the detailed setting screen 804 or the detailed setting screen 805. In the detailed setting screen 804 of FIG. 8, image density priority is selected, which is a setting for obtaining high image quality by giving priority to image density even when USB Type-C power supply state is not in the best state among the assumed cases. Meanwhile, when speed priority is set as in the detailed setting screen 805, a setting is that in which the printing speed is prioritized even in a state where the power supply state is poor.

When the above conditions are met, the processing proceeds to step S506, and the ASIC 210 sets the selected printing mode. After the printing mode is thus set, the processing proceeds to step S507, and the ASIC 210 executes the print process in the set printing mode. When an electronic image is thus printed in accordance with the print job, the processing proceeds to step S508, and the ASIC 210 ends the print operation of the printing apparatus 1000. In step S508 of ending the print operation, the capping operation is performed to prevent the ink from drying in the fine nozzles of the ink discharge mechanism and to avoid discharge failure at the time of next printing. That the minimum power necessary for processing at the end of the print operation remains is ensured by Vbat determination at the time of initial operation. Therefore, even if a USB Type-C cable, which also serves as a power supply, is disconnected midway through the operation, for example, the processing can still be completed up to the capping operation after the final print pass. When the print process is started in step S507, data processing is performed in an image processing flow, and print control processing related to image printing is executed while controlling the image density and printing speed according to the selected printing mode.

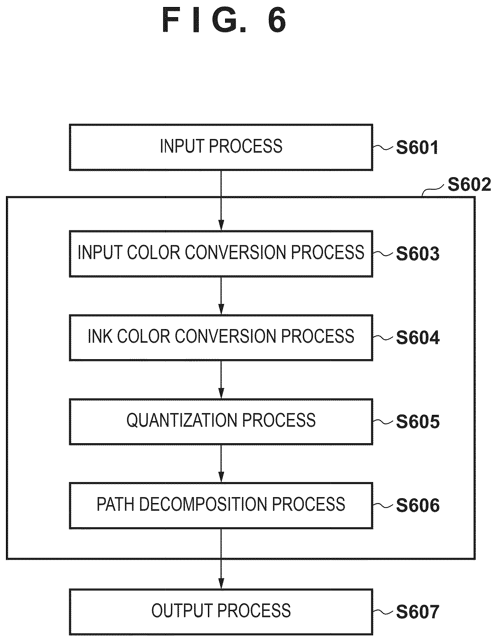

FIG. 6 is a flowchart for explaining an overview of processing in a print process executed by the printing apparatus 1000 according to the first embodiment. That is, in the first embodiment, an image processing unit is constituted by respective elements for control and processing of the printing apparatus 1000 illustrated in FIG. 1B. The configuration of the image processing unit is not limited to the form of the first embodiment. For example, the image processing unit may be implemented in the host PC 112 illustrated in FIG. 1B, or a configuration in which a part of the image processing unit is implemented in the host PC 112 and another part is implemented in the printing apparatus 1000 may be adopted.

An input process of step S601 outputs image data included in a print job received from the host PC 112 to an image process of step S602 based on the print job. The image process of step S602 includes an input color conversion process of step S603, an ink color conversion process of step S604, a quantization process of step S605, and a path decomposition process of step S606.

The input color conversion process of step S603 converts the image data received from the input process of step S601 into image data corresponding to a color gamut of the printing apparatus 1000. The image data to be inputted at this time is data indicating color coordinates (R, G, B) in a color space, such as sRGB, which are display colors of a monitor. The input color conversion process converts R, G, and B (each 8-bit) input image data into image data (R', G', B') in the color gamut of the printing apparatus 1000 by a known method such as matrix operation processing or processing that uses a three-dimensional LUT. In the first embodiment, a three-dimensional lookup table is used, and the conversion process is performed in combination with an interpolation operation. The description will assume that the resolution of the 8-bit image data handled in the image process of step S602 is 600 dpi.

The ink color conversion process of step S604 converts the R, G, and B (each 8-bit) image data processed by the input color conversion process of step S603 into image data based on ink color signal value data used in the printing apparatus 1000. Next, the processing proceeds to step S605, and in the quantization process, a quantization process is performed on the ink color (each 10-bit) color signal value data outputted from the ink color conversion process to reduce the number of tones. Then, the processing proceeds to step S606, and by a path decomposition process, the image data constituted by ink color (each 10-bit) color signal values processed by the quantization process is divided into data for each scan for recording by a plurality of scans. When the image process of step S602 is thus completed, in step S607 an output process is executed, and by driving the print head based on the data obtained by the path decomposition process of step S606 and in synchronization with the scanning of the print head, ink of each color is discharged onto a print medium to perform recording.

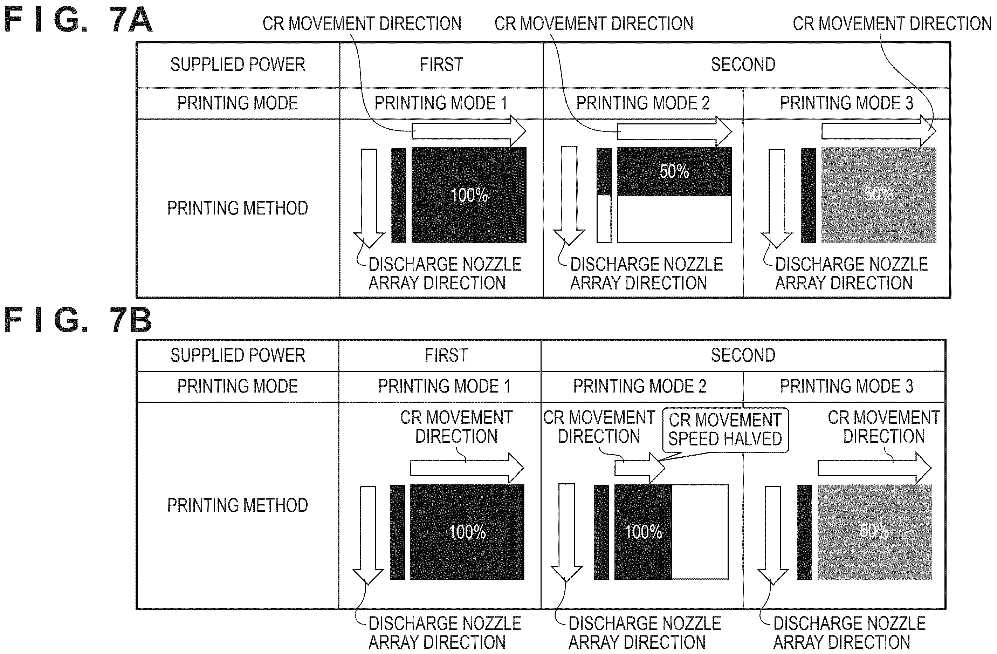

FIGS. 7A and 7B are conceptual diagrams for explaining control of printing speed and image density corresponding to respective printing modes according to the first embodiment.

Printing mode 1 indicated in FIG. 7A is a mode executed in a state (first supplied power) in which supplied power is sufficient, and is a mode in which 100% (all) of the nozzles included in the inkjet head are used, and furthermore, printing is executed at a sufficient carriage scanning speed, as represented by initial settings. Here, for example, the number of discharges and the carriage speed sufficient for printing using 100% of the nozzles in one pass of a serial head are assumed. Therefore, the image density and the printing speed at which printing can be performed in printing mode 1 serve as a reference among all printing modes.

Printing mode 2 of FIG. 7A is a printing mode set in a state (second supplied power) in which supplied power is reduced compared to printing mode 1. In printing mode 2, for example, 50% (half) of the nozzles included in the inkjet head are used in one pass, and the image is printed in multiple passes so as to cover 100% of the paper surface. By thus halving the number of discharges per pass, the amount of power consumption can be reduced. In printing mode 2, since the printing speed is lowered, the same image density as printing mode 1 can be realized.

Printing mode 3 of FIG. 7A is a printing mode set in a state (second supplied power) in which supplied power is reduced compared to printing mode 1. In printing mode 3, for example, the power consumption of the discharge mechanism is reduced by decreasing the number of dots forming the image per unit area. In the example of FIG. 7A, an example in which printing is performed using 50% of the number of dots compared to printing mode 1 is indicated. In printing mode 3, since power reduction is realized by reducing the number of nozzles that can perform discharge in one pass, the same printing speed as printing mode 1 can be realized.

FIG. 7B is a diagram for explaining another example of printing modes.

Printing mode 1 is the same as that of FIG. 7A, and is a printing mode serving as a reference for printing density and printing speed. Printing mode 2 of FIG. 7B is indicated as an example of a printing mode for avoiding multiple passes, and by halving the carriage (CR) scanning speed, the coverage is increased, and as a result, image density can be maintained. Printing mode 3 of FIG. 7B is similar to printing mode 3 of FIG. 7A, and an example of a printing mode when prioritizing a printing speed implemented in the case of a second supplied power, which is lower than a first supplied power.

The movements reflecting these printing modes are established by performing an image process in each step from steps S603 to S606 in FIG. 6.

Here, for example, a method of making the number of dots 50% (half) in printing mode 3 of FIGS. 7A and 7B will be described.

In the input color conversion process of step S603 of FIG. 6, luminance data is converted into luminance data such that the numbers of dots become 50%. The number of dots of all colors for each piece of luminance data is calculated by the data flow of FIG. 6. In addition, by considering the data processing speed, the number of dots per unit time can be calculated. Based on these relationships, it is sufficient to create a conversion table such that the number of dots per unit time becomes half. Further, since conversion is performed using luminance data, there is an effect that it is easy to confirm how it looks on a monitor or the like.

In addition, if there is sufficient power, similar effects can be simply obtained by applying gamma correction to linearize the image density and then converting the linearized density to become half.

Meanwhile, since the above method does not perform separation into ink colors, it is difficult to accurately reflect the number of dots determined by secondary colors and an under color removal process (UCR process). In such cases, multi-valued data separated into ink colors is reduced in the ink color conversion process of step S604. In this case as well, it is sufficient to calculate the number of dots for each input value and create a table for conversion into half the dot value. Alternatively, it is also acceptable to simply perform a computation that halves the image density.

Furthermore, in the case of a strict control, it is necessary to perform control such that the power consumption in each pass does not exceed the capacity. In such cases, it is sufficient to perform control such that the data after being separated into respective passes becomes half the number of discharges per unit time.

In addition, when the viscosities and coverages of inks differ from each other, the sizes of ink droplets of respective colors discharged from the print head may differ, and in such cases, the amounts of power for discharging the ink droplets of respective colors also differ. In such cases, it is sufficient to obtain the total power consumption by multiplying the number of dots for each ink color by a coefficient of the amount of power consumed, and to perform control such that the power consumption becomes half.

As described above, according to the first embodiment, when a printing apparatus connected to a wired interface is operated by being powered from that interface, it is possible to execute printing by selecting a printing mode in accordance with power supply information. As a result, it is thus possible to prevent problems such as the printing apparatus stopping operation due to an insufficient amount of power supplied from a connection destination device. Thus, by being able to reduce the probability of printing being interrupted due to an insufficient amount of power supplied via the interface, it becomes possible to increase the frequency of processing print jobs for which printing can be continued.

[Second Embodiment]

In the above first embodiment, an example in which a printing mode is selected on the input screen of a UI of FIG. 8, and speed priority or image density priority is inputted in accordance with the type of the job to be printed by the user has been described.

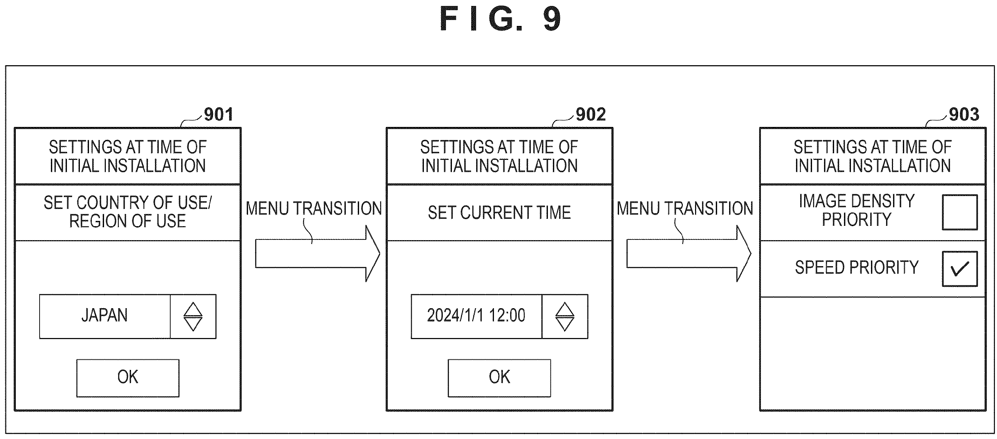

In contrast, in a second embodiment, instead of the user making a selection at the timing of step S505, it may be made possible for setting to be made at the time of initial installation of the printing apparatus 1000, as illustrated in FIG. 9, for example. This eliminates the need for the user to select or input a printing mode each time during a series of operations at the time of printing. Then, a priority printing mode, which serves as a base for the printing apparatus 1000 as to how the user wants to operate the printing apparatus 1000, such as image density priority or printing speed priority, can be set. Since the hardware configuration and the like of the printing apparatus 1000 according to the second embodiment are the same as those of the above first embodiment, the description thereof will be omitted.

FIG. 9 depicts a view illustrating an example of a screen transition at the time of initial installation of the printing apparatus 1000 according to the second embodiment.

In an initial installation setting screen 901, the country, region, or the like where the printing apparatus 1000 is used can be set. In the example of FIG. 9, Japan is selected. The initial installation setting screen 902 allows you to set the current date and time. When an OK button is pressed on the initial installation setting screen 902, an initial installation setting screen 903 is transitioned to. In the initial installation setting screen 903, for example, speed priority is selected.

This makes it possible for the user to set, for example a mode in which the printing speed is prioritized, as the priority printing mode, which serves as a base of the operation of the printing apparatus.

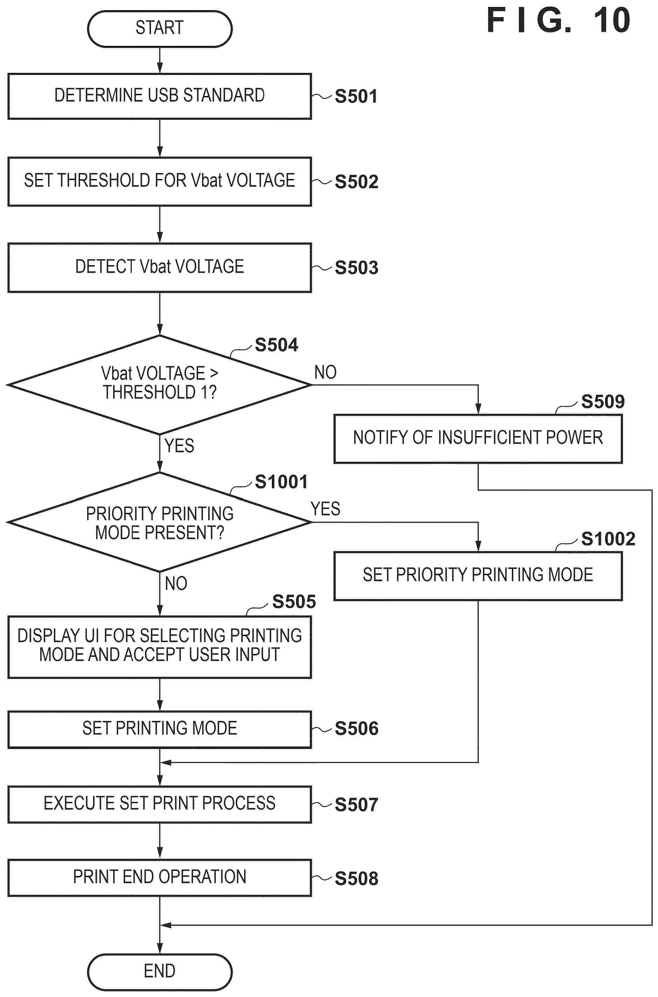

FIG. 10 is a flowchart for explaining processing when the printing apparatus 1000 according to the second embodiment receives power supply via a wired connection and executes printing. This processing starts, for example, by a USB device being inserted into the USB I/F 107 of the printing apparatus 1000. In FIG. 10, the same processes as in FIG. 5 according to the first embodiment described above are denoted by the same reference numerals, and the description thereof will be omitted.

If it is determined in step S504 that the Vbat voltage is greater than threshold 1, the processing proceeds to step S1001, and the ASIC 210 determines whether the priority printing mode is set in the initial installation settings described in FIG. 9. If the priority printing mode is not set in the initial installation settings, the processing proceeds to step S505, and processing similar to that of the above first embodiment is executed. Meanwhile, if it is determined that the priority printing mode is set in the initial installation settings, the processing proceeds to step S1002, and the ASIC 210 sets the printing mode in the initial installation settings and the processing advances to step S507. At this time, a configuration may be taken so as to determine whether printing in the set priority printing mode is possible based on the Vbat voltage, and if possible, the processing proceeds to step S1002 to set the printing mode. Further, a configuration may be taken so as to, if not possible, proceed to step S505, present to the user a printing mode other than the priority printing mode that can be selected, and prompt the user to make a selection.

In FIG. 9, a configuration may be taken so as to display, for example, the second screen 802 for various settings 2 of FIG. 8, between the initial installation setting screen 902 and the initial installation setting screen 903, and transition to the initial installation setting screen 903 when the item 803 for USB Type-C power supply is selected.

As described above, according to the second embodiment, it is possible to set, at the time of initial installation of the printing apparatus, whether to prioritize print speed or image density, for example, in accordance with the type of the job to be printed. This has the effect of eliminating the need for the user to set a printing mode each time during a series of operations at the time of printing.

[Third Embodiment]

Next, a third embodiment will be described. Since the hardware configuration and the like of the printing apparatus 1000 according to the third embodiment are the same as those of the above first embodiment, the description thereof will be omitted.

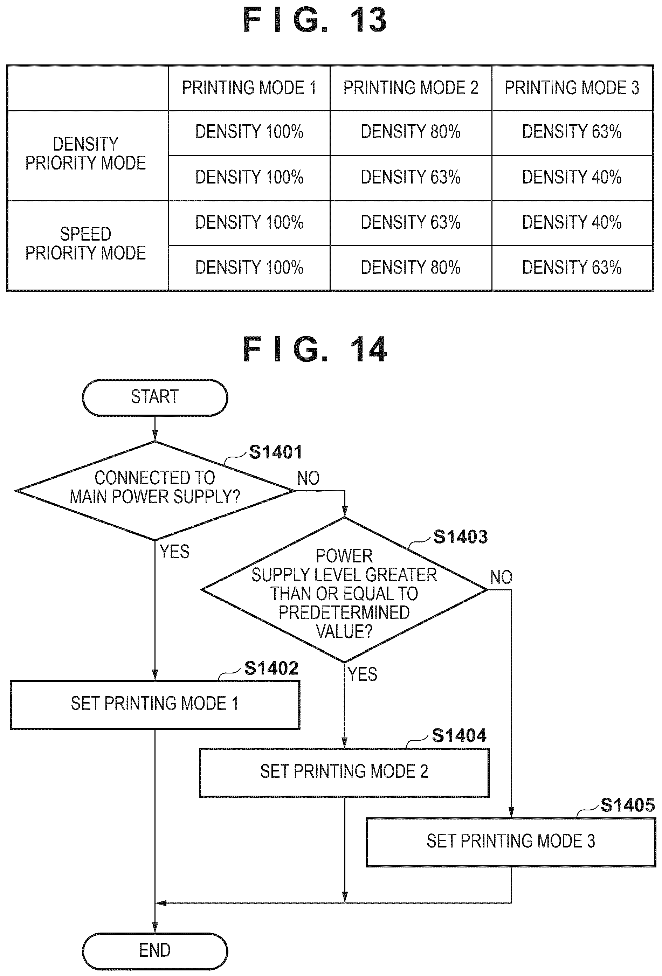

FIG. 14 is a flowchart for explaining processing for determining a printing mode in accordance with the power supply state in the printing apparatus 1000 according to the third embodiment. The processing described in this flowchart is started by the printing apparatus 1000 being powered on, and further, the processing is realized by the CPU 101 deploying and a program stored in the ROM 103 into the RAM 102 and executing the program. The processing may be started not only by a power-on, but also, for example, when a print job is inputted, upon receiving a printing mode setting command from the host PC 112, in accordance with an instruction operation from a user, or the like.

In step S1401, the CPU 101 first determines whether a connection to the main power supply has been established. This can be determined by a signal from the power supply board I/F 108. When it is determined that a connection to the main power supply has been established and power is supplied from the main power supply, the processing proceeds to step S1402, and the CPU 101 sets printing mode 1. As described above with reference to FIG. 7A, this is a mode implemented in a state in which supplied power is sufficient. That is, it is a mode in which 100% (all) of the nozzles included in the inkjet head are used, and furthermore, printing is executed at a sufficient carriage scanning speed, as represented by initial settings.

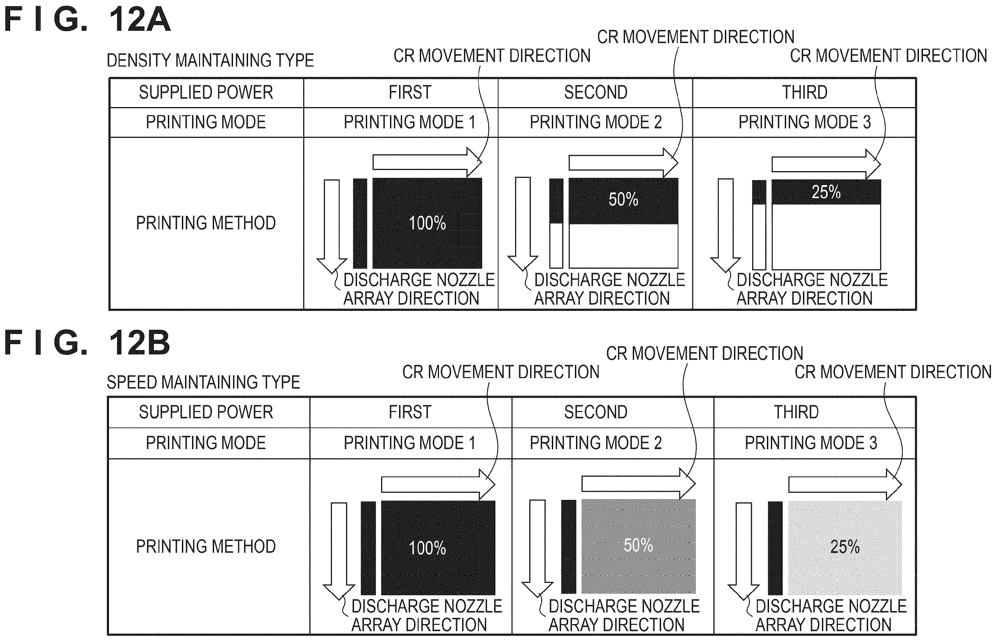

Meanwhile, in step S1401, if the CPU 101 determines that a connection to the main power supply has not been established, the processing proceeds to step S1403, and the CPU 101 determines whether the power supply level indicated by the Vbat voltage is greater than or equal to a predetermined value. Here, if it is determined that the power supply level is greater than or equal to the predetermined value, the processing proceeds to step S1404, and the CPU 101 sets printing mode 2. Further, in step S1404, if the CPU 101 determines that the power supply level is less than the predetermined value, the processing proceeds to step S1405, and the CPU 101 sets printing mode 3. Printing mode 2 and printing mode 3 may be those described above with reference to FIGS. 7A and 7B, or may be those in FIGS. 12A to 12D, which will be described later.

FIGS. 12A to 12D are conceptual diagrams for explaining control of printing speed and image density corresponding to respective printing modes according to the third embodiment.

FIGS. 12A and 12B are diagrams illustrating conceptual diagrams in which printing speed and image density are controlled in each printing mode throughout the print process of FIG. 6 up to the output process.

Printing mode 1 of FIGS. 12A and 12B corresponds to a state in which supplied power is sufficient, and executes printing using 100% (all) of nozzles included in an ink discharge unit. Further, it indicates an operation state in which printing is performed with sufficient carriage speed in the scanning direction, as represented by initial settings. The printing mode assumes a number of discharges and a carriage scanning speed sufficient for image formation using 100% of nozzles in one pass of the serial head, and serves as the reference for image density and printing speed among all the printing modes.

FIG. 12A illustrates a case where density maintaining and power saving printing modes are provided. Printing mode 2 of FIG. 12A is a printing mode that is set in a state (second supplied power) in which supplied power is reduced compared to printing mode 1, and forms an image by using 50% (half) of the nozzles included in the ink discharge unit so as to cover the paper surface in multiple passes, such as two passes. By thus halving the number of nozzles discharging ink, the amount of power consumption per unit time can be reduced.

In addition, printing mode 3 of FIG. 12A further reduces the number of nozzles used, using 25% (1/4) of the total number of nozzles to form an image so as to cover the paper surface in multiple passes, such as four passes. In this case, the operation becomes one in which power consumption per unit time can be further reduced compared to printing mode 2 (third supplied power), and the image density can be maintained. When thus printing is performed using (1/(integer)) of the total number of nozzles in one pass, the number of passes becomes multiple passes equal to that integer.

FIG. 12B illustrates a case where speed maintaining and power saving printing modes are provided. Printing mode 2 of FIG. 12B is a printing mode set in a state (second supplied power) in which supplied power is reduced compared to printing mode 1, and reduces the power consumption of the discharge mechanism by decreasing the ratio of the number of dots forming an image per unit area. In this example, printing mode 2 represents a state in which the number of dots is 50% compared to printing mode 1. Further, printing mode 3 is a printing mode set in a state (third supplied power) in which supplied power is further reduced compared to printing mode 2. In printing mode 3, the number of dots is set to 25% compared to printing mode 1. In FIG. 12B, since an image is formed in one pass in all of the printing modes, the image density decreases, but the printing speed can be maintained.

The printing modes indicated in FIGS. 12A and 12B are established by the image process in each step from steps S603 to S606 of FIG. 6. Here, for example, a method of making the number of dots 50% (half) in printing mode 2 of FIG. 12B will be described.

In the input color conversion process of step S603, luminance data is converted into luminance data in which the numbers of dots are 50%. The number of dots of all colors for each piece of luminance data is calculated by the data flow of FIG. 6. In addition, by considering the data processing speed, the number of dots per unit time can be calculated. Based on this relationship, it is sufficient to create a conversion table such that the number of dots per unit time becomes half. Further, since conversion is performed using luminance data, there is an effect that it is easy to confirm how it looks on a monitor or the like.

In addition, if sufficient power is available, similar effects can be simply obtained by applying gamma conversion to linearize the change in image density and then converting the image density to become half.

Meanwhile, since the above method does not perform separation into ink colors, it is difficult to accurately reflect the number of dots determined by secondary colors and a UCR process. In such cases, multi-valued data separated into ink colors is reduced in the ink color conversion process of step S604. In this case as well, it is sufficient to calculate the number of dots for each input value and create a table for conversion into half the dot value. Alternatively, it is also acceptable to simply perform a computation that halves the image density.

Furthermore, in the case of a strict control, it is necessary to perform control such that the power consumption in each pass does not exceed the capacity. In such cases, it is sufficient to perform control such that the data after being separated into print data for respective passes becomes half the number of discharges per unit time.

In addition, in a system in which the viscosities and coverages of inks differ from each other, the dot sizes of respective ink colors may differ. In such cases, the power for discharging the dots of respective ink colors differs. In such cases, it is sufficient to perform control such that the power becomes half, based on the product of the number of dots for each ink color and a coefficient of the power consumed.

As described above, a representative example of a series of flows in which a printing mode is selected in accordance with power supply information from a device to which a printing apparatus is connected by a wire and then printing is completed has been described. As a result, it thus becomes possible to select a printing mode that can reduce the probability of the printing apparatus stopping operation due to an insufficient power amount of the connection destination device, and increase the frequency of job processing in which printing can be continued.

(Modification of Third Embodiment)

Here, a modification of the third embodiment will be described.

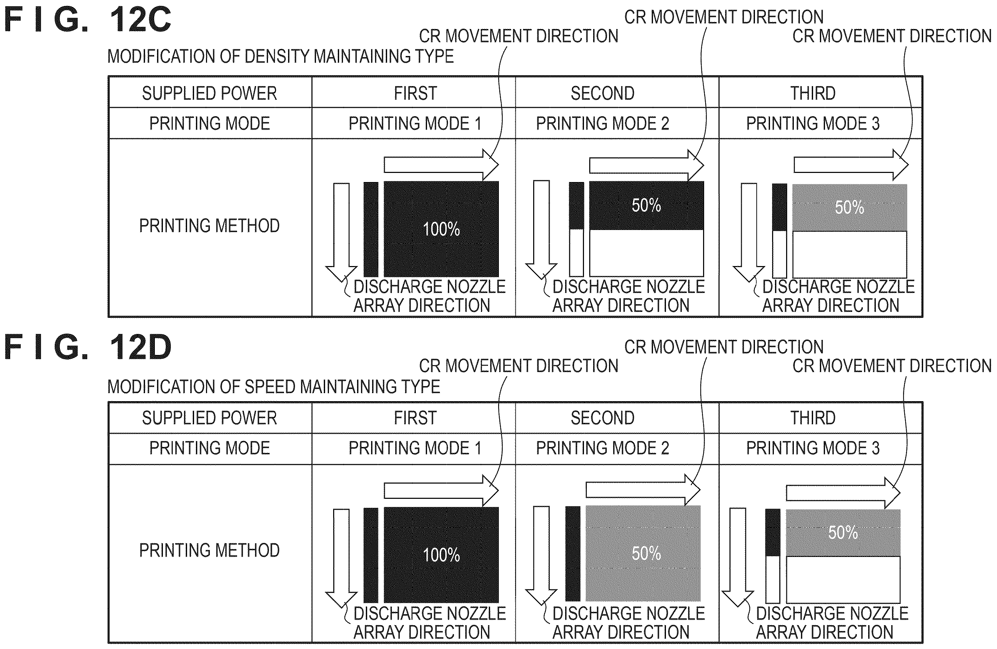

FIG. 12C is a conceptual diagram for explaining control of printing speed and image density corresponding to a printing mode that is a modification of a density maintaining type (density priority), and FIG. 12D is a conceptual diagram for explaining control of printing speed and image density corresponding to a printing mode that is a modification of a speed maintaining type (speed priority). Here, condition 1 (power consumption in printing mode 1

> power consumption in printing mode 2) and condition 2 (power consumption in printing mode 2 > power consumption in printing mode 3) are satisfied. An example in which carriage scanning speed and image density do not fall below approximately 50% is indicated. Here, in the case of the density maintaining type, in printing mode 2 of FIG. 12C, printing is executed in two passes using 50% (half) of the nozzles. Meanwhile, in the case of the speed maintaining type, in printing mode 2 of FIG. 12D, printing is executed in one pass using 50%

(half) of the nozzles. Therefore, there is a difference in processing between the speed maintaining type and the density maintaining type. However, in the case of printing mode 3 of FIGS. 12C and 12D, printing is executed in two passes using 50% (half) of the nozzles in both the density maintaining type and the speed maintaining type. Therefore, there is no difference in processing between the speed maintaining type and the density maintaining type.

As thus illustrated in FIGS. 12C and 12D, if the above conditions 1 and 2 are satisfied, processing in which both image density reduction and printing speed reduction are executed may be performed as in printing mode 3.

FIG. 13 is a diagram illustrating an example of printing mode 2 and printing mode 3 in which both image density reduction and printing speed reduction are executed.

In this case, in addition to the above condition 1 and condition 2, conditions, which are condition 3 (image density in density priority mode > image density in speed priority mode) and condition 4 (printing speed in density priority mode < printing speed in speed priority mode), are satisfied in printing mode 2 and printing mode 3.

[Fourth Embodiment]

Next, an example in which it is possible to reduce the probability of the printing apparatus stopping operation due to an insufficient supplied power amount by changing the arrangement of dots to be printed in accordance with power supply information from a wireconnected device will be described as a fourth embodiment of the present disclosure. Since the hardware configuration and the like of the printing apparatus according to the fourth embodiment are the same as those of the above embodiments, the description thereof will be omitted.

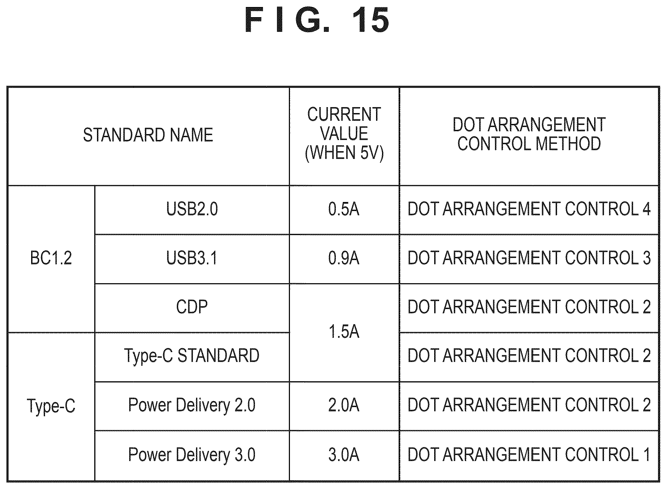

FIG. 15 is a diagram illustrating an example of switching dot arrangement control, which is determined by a Vbat voltage and the amount of power supplied from the USB, according to the fourth embodiment. The printing mode will be described with reference to dot arrangement control 1 for when there is sufficient supplied power and dot arrangement controls 2 to 4 which are applied in a state in which supplied power has decreased. The data indicating a relationship between the amount of power supplied from the USB, Vbat, and the printing mode, as illustrated in FIG. 15, may be held in the ROM 103 as table data or may be implemented as program code for determining dot arrangement.

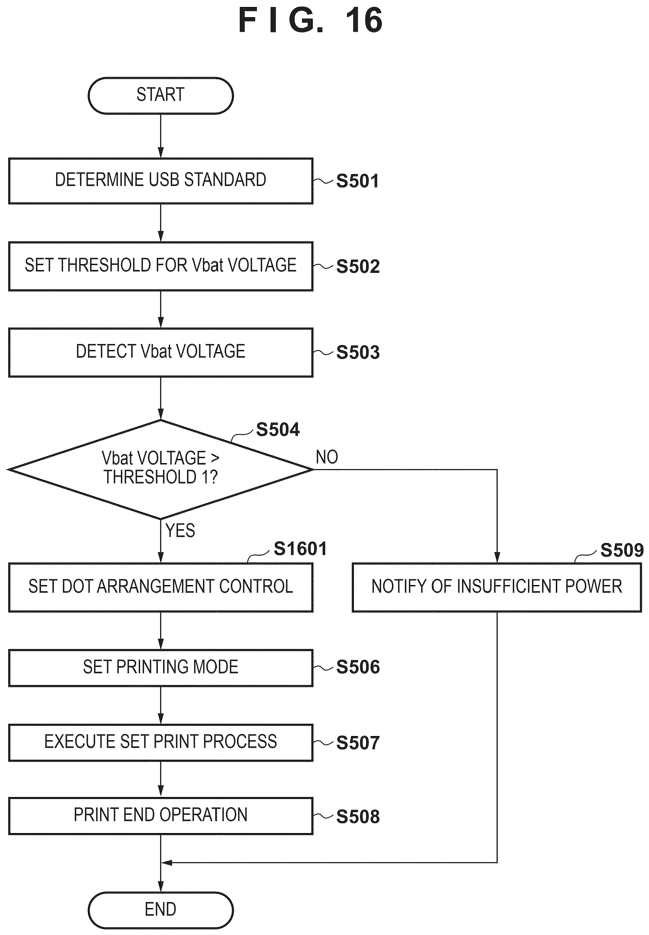

FIG. 16 is a flowchart for explaining processing when the printing apparatus 1000 according to the fourth embodiment receives power supply via a wired connection and executes printing. This processing starts, for example, by a USB device being inserted into the USB I/F 107 of the printing apparatus 1000. In FIG. 16, the same processes as in the flowchart of FIG. 5 described above are denoted by the same reference numerals, and the description thereof will be omitted.

In step S504, when Vbat > threshold 1, the processing proceeds to step S1601, and the ASIC 210 determines a dot arrangement control method based on the data illustrated in FIG. 15 from a USB power supply determination result determined in step S501, the voltage Vbat detected in step S502. In the example of FIG. 15, in the case of a Power Delivery 3.0 connection via a USB Type-C connection, dot arrangement control 1 is selected, and in the case of a Power Delivery 2.0 connection and a Type-C standard in Type-C and in the case of a CDP connection in BC 1.2, dot arrangement control 2 is selected. Further, in the case of USB 3.1 in BC 1.2, dot arrangement control 3 is selected, and in the case of USB 2.0, dot arrangement control 4 is selected. The dot arrangement control when supplied power is low may be used when supplied power is high. Details of dot arrangement controls 1 to 4 will be described later. When a dot arrangement control setting is thus determined in step S1601, the processing proceeds to step S506, and the print process is started.

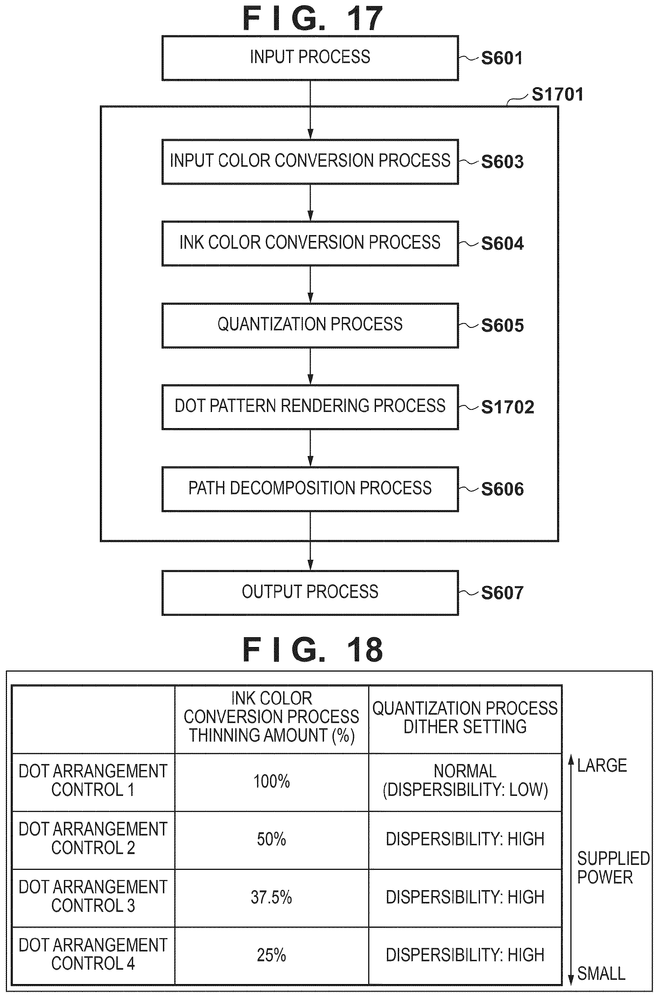

FIG. 17 is a flowchart for explaining an overview of processing in a print process executed by the printing apparatus 1000 according to the fourth embodiment. In FIG. 17, the same processes as in FIG. 6 described above are denoted by the same reference numerals, and the description thereof will be omitted. The image process of step S1701 includes an input color conversion process of step S603, an ink color conversion process of step S604, a quantization process of step S605, a dot pattern rendering process of step S1702, and a path decomposition process of step S606.

The quantization process of step S605 performs a quantization process on the ink color (each 10-bit) color signal value data outputted from the ink color conversion process of step S604 to reduce the number of tones. In the quantization process used in the printing apparatus 1000, mainly error diffusion (ED method) and dither processing that uses a threshold matrix are used. In the following, in the fourth embodiment, a case of dither processing will be described, but other quantization methods may be used.

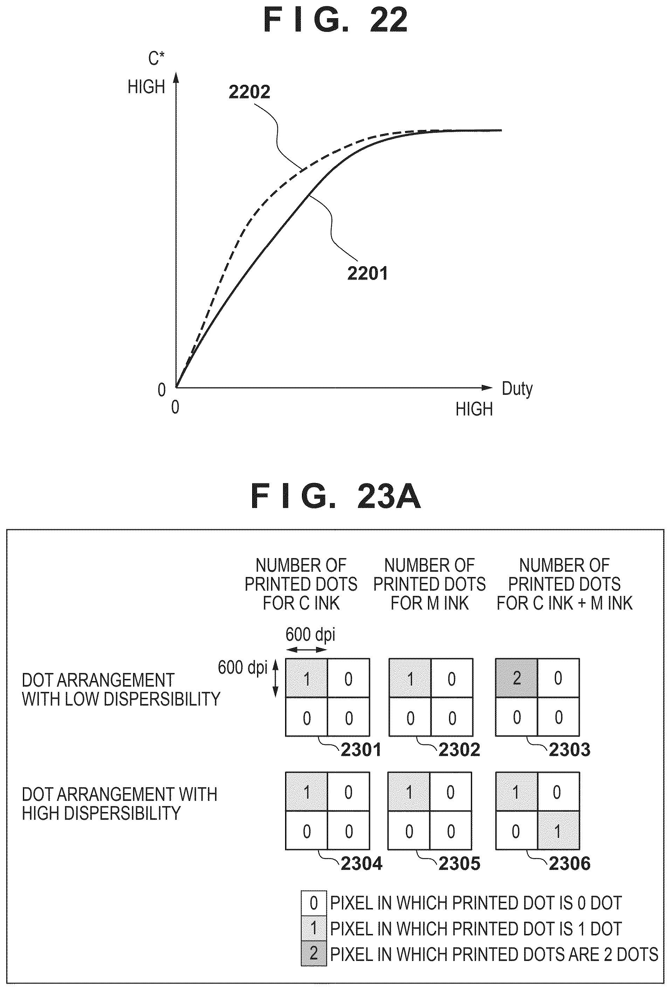

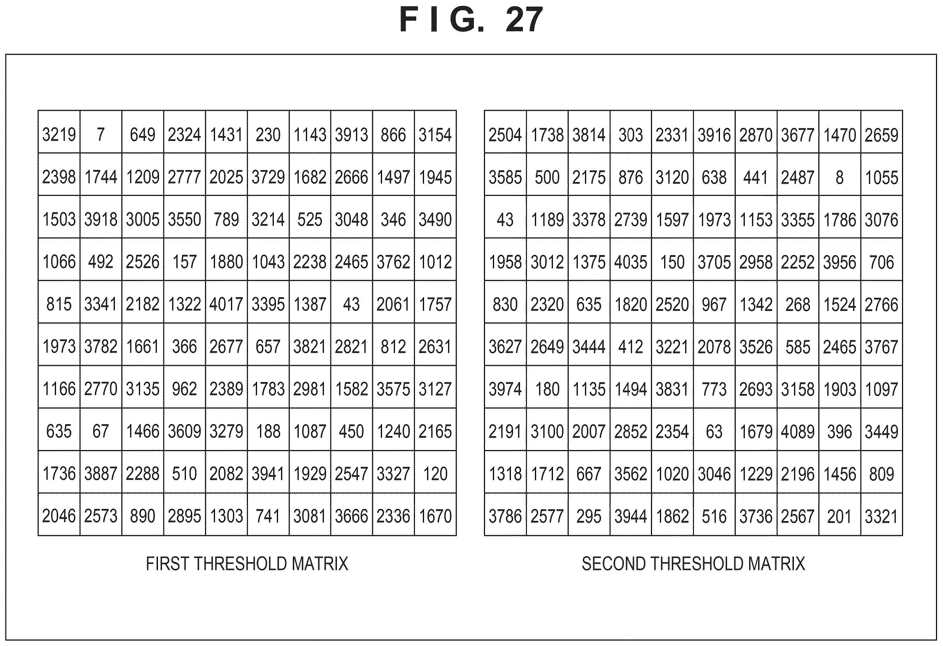

FIG. 27 depicts a view illustrating an example of a threshold matrix used for dither processing. Both threshold matrices have blue noise characteristics, but the distribution of thresholds is different from each other. This is not intended to be limiting. FIG. 27 illustrates examples of two threshold matrices. The first and second threshold matrices of FIG. 27 are applied for respective colors. For example, the method is one in which the first threshold matrix is applied to the C ink and the second threshold matrix is applied to the M ink. The matrices themselves and the colors to which they are applied are not limited to this. In the dot pattern rendering process of step S1702, the result of the quantization process of step S605 is rendered into a print dot pattern. Details will be described later with reference to FIGS. 23A to 23C.

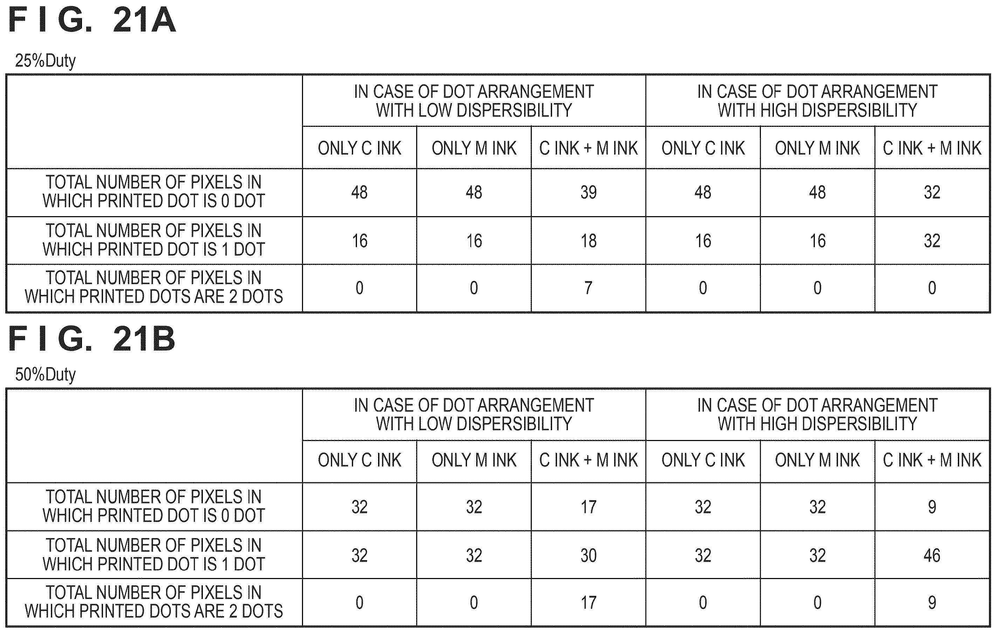

Next, details of the dot arrangement control method will be described with reference to FIGS. 18 to 21A and 21B.

FIG. 18 is a diagram for describing detailed control of dot arrangement control methods 1 to 4, which are referenced in relation to the power supply amount in dot arrangement control setting of step S1601 in FIG. 16.

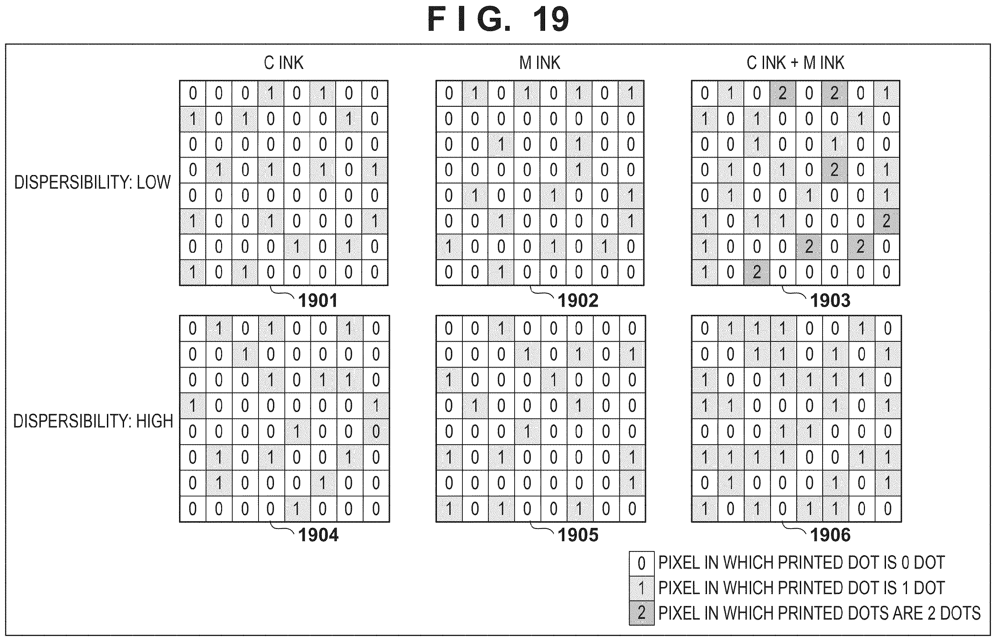

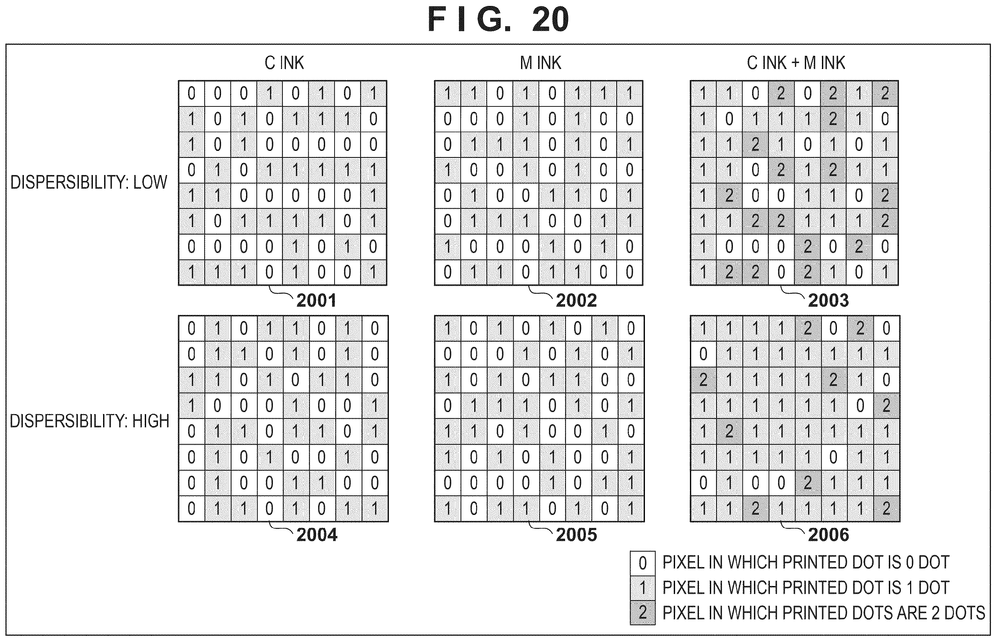

FIG. 18 illustrates setting conditions of a combination of the ink color conversion process of step S604 and the quantization process of step S605 in the actual image process of step S1701. Here, "thinning amount (%)" indicates ink coated amount, that is, a limited total amount of ink droplets discharged from the inkjet head. In FIG. 19, the respective thinning amounts of C ink and M ink are 25%, resulting in the dot arrangement at the time of solid printing for "dot arrangement control 4" in FIG. 18. Similarly, in FIG. 20, the respective thinning amounts of C ink and M ink are 50%, resulting in the dot arrangement at the time of solid printing for "dot arrangement control 2" in FIG. 18. In the fourth embodiment, in accordance with FIGS. 15 and 18, when supplied power is Power Delivery 3.0 in Type-C, supplied power is 3.0 A (second level), and normal dot arrangement control (with low dispersibility), which is dot arrangement control 1, is performed, and when supplied power is lower than that, such as when supplied power is USB 2.0 (first level) in BC 1.2, dot arrangement control with high dispersibility such as dot arrangement control 4 is performed.

In the ink color conversion process of step S604, the ink color conversion process is performed based on "thinning amount (%)" that corresponds to supplied power. It is appropriate to calculate the thinning amount in step S604 in which the value of each ink color is determined. In addition, the dot sizes may differ. In that case, since the power for discharging the dots of each ink color differs, it is sufficient to determine the thinning amount of each ink color by taking those into account. In FIG. 18, a uniform value is described for each ink color, but the thinning amount may be changed for each ink color, and there is no problem as long as the total power falls within a predetermined range. Further, to simplify processing, this can be achieved by brightening the input image density in the input color conversion process of step S603, which is a preceding step.

The "thinning amount (%)" is a relative value of the amount of printing ink resulting from thinning, with 100% being the case when supplied power is at its maximum, and it is indicated that, taking the maximum supplied power as 100%, as the supplied power decreases, dots are thinned and printed to become gradually lighter through dot arrangement controls 1 to 4. By thus decreasing the printing amount in steps in accordance with supplied power, it is possible to prevent a reduction in printing speed.

Further, dither setting of the quantization process of step S605 is controlled in accordance with a difference in dispersibility of printed dots. Normal processing with "low dispersibility" is performed only when the supplied power is at its maximum. Settings are made to perform processing with "high dispersibility" when the supplied power decreases.

The "dispersibility of dot arrangement" according to the fourth embodiment will be described with reference to FIGS. 23A to 23C.

FIG. 23A illustrates dot arrangement after processing of the quantization process of step S605 in $2 \times 2$ pixels at 600 dpi. Reference numerals 2301 and 2304 indicate the printed dot arrangement of each pixel for cyan ink (C ink), and reference numerals 2302 and 2305 indicate the printed dot arrangement of each pixel for magenta ink (M ink). Further, reference numerals 2303 and 2306 indicate a sum of those numbers of dots. In FIG. 23A, the numerical value of each pixel indicates the number of printed dots on the paper surface: "0" indicates a pixel in which the printed dots are "0 dots", "1" indicates a pixel in which the printed dots are "1 dot", and "2" indicates a pixel in which the printed dots are "2 dots". The dot arrangements 2301 to 2303 indicate dot arrangements with "low dispersibility", and the dot arrangements 2304 to 2306 indicate dot arrangements with "high dispersibility". FIG. 23A indicates a case where 1 dot has been printed for each of C ink and M ink in $2 \times 2$ pixels.

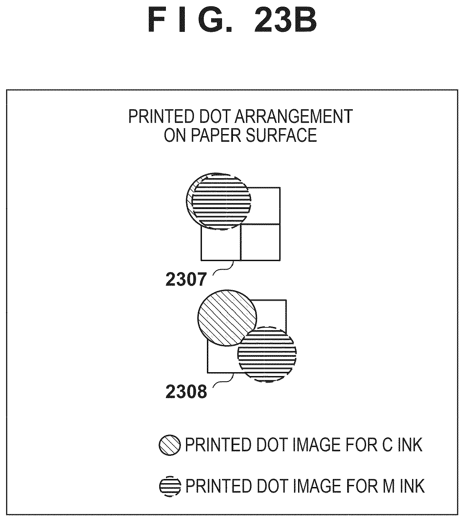

FIG. 23B illustrates the states of printed dots on the actual paper surface for C ink and M ink. Actual printed dots are close to circular, and due to dot gain, their surface area becomes larger relative to the actual 600 dpi pixel.

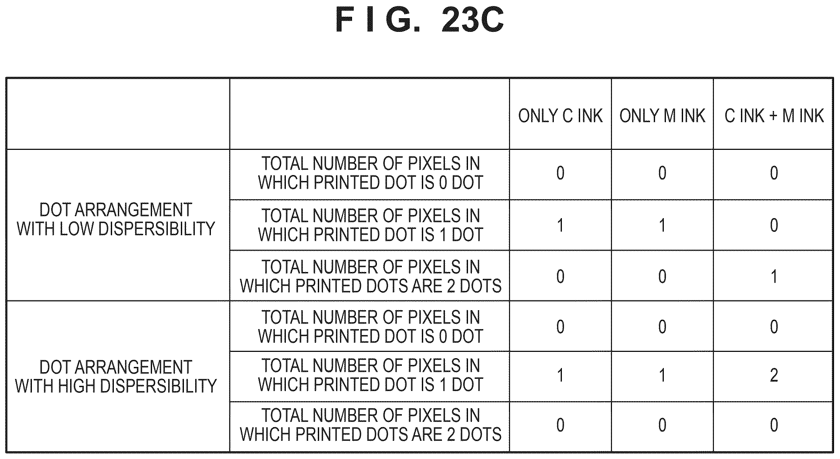

Further, FIG. 23C is a diagram illustrating the total number of pixels for each number of printed dots in the dot arrangements 2301 to 2306.

In FIG. 23A, in a single color dot arrangement for each color, there is one "1-dot" pixel and the remaining three pixels are pixels without printed dots. In the sum of C ink + M ink, there is a difference in the number of occurrences of "0-dot", "1-dot" and "2-dot" pixels between reference numerals 2303 and 2306.

FIG. 23C illustrates that difference in the number of occurrences. In the dot arrangement 2303, there is one pixel in which the sum is "2 dots", whereas in the dot arrangement 2306, there are no pixels with "2 dots". Instead, in the dot arrangement 2306, there are two pixels in which the sum is "1 dot", whereas in the dot arrangement 2303, there are no "1-dot" pixels. As a result, in the dot arrangement 2303, there are three "0-dot" pixels, whereas in the dot arrangement 2306, there are two pixels, which is fewer. Such a difference in the degree of occurrence of pixels in which C ink and M ink overlap is referred to as a "difference in dispersibility" in the fourth embodiment. Further, the dot arrangement in which the degree of occurrence of pixels in which C and M inks overlap is relatively low is referred to as "dot arrangement with high dispersibility", and the dot arrangement in which the degree of occurrence of pixels in which C and M inks overlap is relatively high is referred to as "dot arrangement with low dispersibility".

Furthermore, as can be seen from the arrangement of printed dots in FIG. 23B, it can be seen that in a $2 \times 2$ pixel area at 600 dpi, unprinted area (white background of the paper) is larger in a dot arrangement 2307 and smaller in a dot arrangement 2308. As described above, even if the same number of dots of C ink and M ink are printed, the dot arrangement 2308 has a higher coverage on the paper surface, and even if the same amount of color material is applied on the paper surface, there is an effect in which the color development efficiency improves, and optically, the image density becomes higher.

In the fourth embodiment, dot arrangement conditions for C ink and M ink are defined, but the ink colors are not limited to these. It is similar for other ink colors, and also to the same color of ink.

Next, a method of controlling dispersibility of dot arrangement in the fourth embodiment will be described with reference to FIGS. 19 to 22.

In FIGS. 19 and 20, reference numerals 1901, 1904, 2001, and 2004 indicate the dot arrangement of each pixel for cyan ink (C ink) after the quantization process of step S605. In addition, reference numerals 1902, 1905, 2002, and 2005 indicate the dot arrangement of each pixel for magenta ink (M ink), and reference numerals 1903, 1906, 2003, and 2006 indicate the arrangement of the sum of dots of each pixel for cyan ink and magenta ink. In FIGS. 19 and 20, for simplicity of explanation, the size is schematically set to 8 pixels $\times$ 8 pixels, which is different from the dither matrix of FIG. 27 described above, but does not affect the intent of the fourth embodiment. Further, in the fourth embodiment, dot arrangement conditions for C ink and M ink are defined, but the ink colors are not limited to these.

FIG. 19 illustrates a case where printing duties of C ink and M ink are 25%, and FIG. 20 illustrates a case where the respective printing duties of C ink and M ink are 50%.

In the two drawings, the numerical value of each pixel indicates the number of printed dots on the paper surface: "0" indicates a pixel in which the printed dots are "0 dots", "1" indicates a pixel in which the printed dots are "1 dot", and "2" indicates a pixel in which the printed dots are "2 dots". The dot arrangement with low dispersibility is indicated by the dot arrangements 1901 to 1903 of FIG. 19 and the dot arrangements 2001 to 2003 of FIG. 20. Further, the dot arrangement with high dispersibility is the dot arrangements 1904 to 1906 of FIG. 19 and the dot arrangements 2004 to 2006 of FIG. 20.

FIGS. 21A and 21B are diagrams illustrating an example of counting a total number of pixels in 8 pixels $\times$ 8 pixels for each number of printed dots under the respective conditions of FIGS. 19 and 20. FIG. 21A corresponds to 25% duty printing of FIG. 19, and FIG. 21B corresponds to 50% duty printing of FIG. 20.

Features will be described below with reference to the dot arrangement at the time of 25% duty printing.

As illustrated in FIG. 19, regardless of the difference in dispersibility, in a single color dot arrangement for each color, there are 16 "1-dot" pixels (= 8 pixels × 8 pixels × 25%) and the remaining 48 pixels have no printed dots. Meanwhile, due to the difference in dispersibility, there is a difference in the respective numbers of occurrences of "0 dots", "1 dot" and "2 dots" in the dot arrangements 1903 and 1906 for the sum of C ink + M ink.

FIG. 21A indicates the difference, and compared to the dot arrangement with low dispersibility, in the dot arrangement with high dispersibility, there are fewer "2-dot" printing pixels, and instead, more "1-dot" printing pixels. Such a difference in the degree of occurrence of pixels in which C ink and M ink overlap is referred to as a "difference in dispersibility" in the fourth embodiment. Further, the dot arrangement in which the degree of occurrence of pixels in which C ink and M ink overlap is relatively lower is referred to as "dot arrangement with high dispersibility", and the dot arrangement in which the degree of occurrence of pixels in which C ink and M ink overlap is relatively higher is referred to as "dot arrangement with low dispersibility".

When printing at 25% duty, in the dot arrangement with high dispersibility, there are no pixels in which C ink and M ink overlap at all, and C ink and M ink are completely separated and arranged in different pixels.

Similarly, also at the time of 50% duty printing of FIG. 20, in a single color dot arrangement for each color, there are 32 "1-dot" pixels (= 8 pixels × 8 pixels × 25%) and the remaining 32 pixels have no printed dots. Meanwhile, due to the difference in dispersibility, there is a difference in the respective numbers of occurrences of "0 dots", "1 dot" and "2 dots" in the dot arrangements 2003 and 2006 for the sum of C ink + M ink. In FIG. 21B, similarly to printing at 25% duty, the dot arrangement with high dispersibility is a dot arrangement in which the number "2-dot" printing pixels is lower and the number of 1-dot printing pixels is higher. A difference from when printing at 25% duty is that even in the dot arrangement with high dispersibility, nine "2-dot" printing pixels occur. This is due to the fact that, as duty increases, the number of printed dots increases and becomes denser. There is no change in referring to a dot arrangement in which the number of "2-dot" printing pixels in which C ink and M ink overlap is relatively large as a "dot arrangement with low dispersibility", and referring to a dot arrangement in which that is relatively small as a "dot arrangement with high dispersibility".

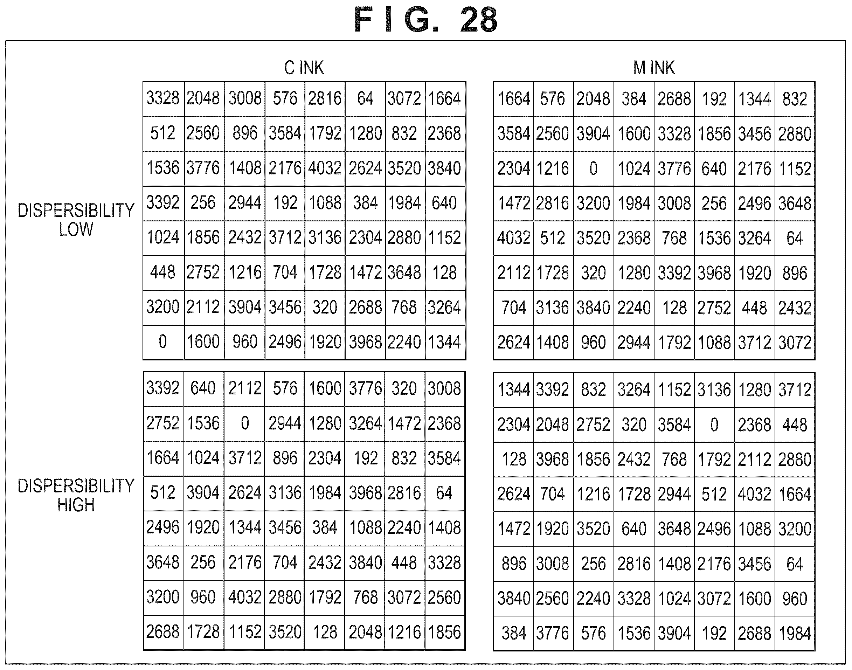

FIG. 28 depicts a view illustrating examples of dither matrices for realizing the dot arrangement of FIGS. 19 and 20. The quantization process is performed in step S605 by using these matrices, and the above dot arrangements with different dispersibility can be realized.

Using differences in dot arrangement dispersibility has the effect of improving density and color development on the image. Description will be given with reference to FIG. 22. In FIG. 22, the horizontal axis is the printing duty, the vertical axis is saturation (C*). C* is also defined by CIE and represents "vividness", which is one of the indices indicating image color reproducibility. The greater the numerical value, the more it indicates a state of "higher vividness" in appearance. A solid line 2201 in the drawing indicates a relationship between printing duty and C* in the case of "dot arrangement with low dispersibility" and a dashed line 2202 indicates a relationship between printing duty and C* in the case of "dot arrangement with high dispersibility". C* tends to be higher for the dashed line 2202 from low duty to medium duty. Then, as duty increases, that difference disappears, and when duty is at its highest, they become nearly identical. This is because at a medium duty, there are more instances of arrangement in which the C ink and the M ink overlap, as illustrated by the dot arrangement 2303 of FIG. 23A described above, and arrangement in which the C ink and the M ink are printed on different pixels, as illustrated by the dot arrangement 2306. As described above, the dot arrangement 2308 allows for a relatively higher paper surface coverage than the dot arrangement 2307, and dot arrangements with better color development efficiency tend to occur more frequently at a medium duty. In particular, as in the fourth embodiment, when thinning printing is performed in a state in which the supplied power is lower than in the normal state, image formation uses a medium duty rather than a high duty, and such a "dot arrangement with high dispersibility" is more advantageous for overall image color development.

Next, effects of printing method control of the fourth embodiment will be described.

As illustrated in FIG. 18, by thinning dots and decreasing the printing amount in steps in accordance with supplied power, it is possible to prevent a reduction in printing speed. Further, by using a dot arrangement with high dispersibility, it is possible to prevent a reduction in image density and color development caused by thinning printing. In the fourth embodiment, control for the dot arrangement of C ink and M ink has been described, but as long as the characteristics as in FIG. 22 can be reproduced, this is not intended to be limiting. In FIG. 22, description has been given using the example of chroma C*, but similarly, even when OD values or the like that indicate image density are used, a dot arrangement with high dispersibility results in a relatively higher density and a suitable image. Further, in the case of a single color rather than a plurality of colors, if a dot arrangement with high dispersibility as illustrated in FIG. 23 can be realized, effects intended by the fourth embodiment can be similarly expected.

In addition, regarding a dot arrangement in cases where the supplied power is large and the amount of power at the time of printing is sufficient, it is common for dot dispersibility to be determined in consideration of image effects, such as variations in ink dot landing on the paper surface. In the fourth embodiment, when the supplied power is relatively low, if the state is one of relatively high dispersibility, it is possible to prevent a reduction in image density and color development caused by thinning printing.

In the fourth embodiment, the arrangement of the printed dots corresponding to the supplied power is controlled as described above, but the printed image on the actual paper surface is different depending on the control. By providing a means for notifying the user of the printing state and communicating that the output result differs from the usual at the time of printing, an effect of enhancing user convenience can be expected. For example, it may be notified in advance that the state of the dot arrangement will change on the display unit 192. There is an effect that if the user knows in advance that the print job is not in the normal state and wants to change it to the normal state, the user can change the power supply method and then perform printing. In addition, by indicating the current power supply method to the user at that time, an effect of making the current power supply state clear to the user and reducing the effort of confirmation can be expected. The contents of the notification to the user here are the name of the current power supply standard (refer to FIG. 15) and, corresponding to that, content that notifies whether the printing state is normal or not. As long as the user can understand the dot arrangement change state and the power supply method (power supply state), text or the like to be displayed is not limited to this. Further, the notification means to the user need not be a means such as the display unit 192 and may be a simple configuration that uses LED. At that time, by stopping the display of changes in the printer state on the display unit 192 and indicating them via the number of LEDs, blink intervals, and the like, an effect of being able to reduce the power required for the display unit 192 and of allocating that power to the printing operation instead can be expected.

(Fifth Embodiment)

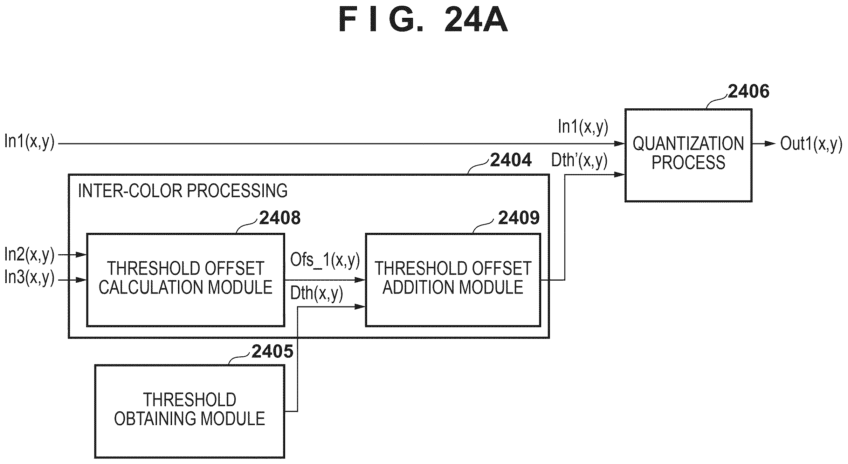

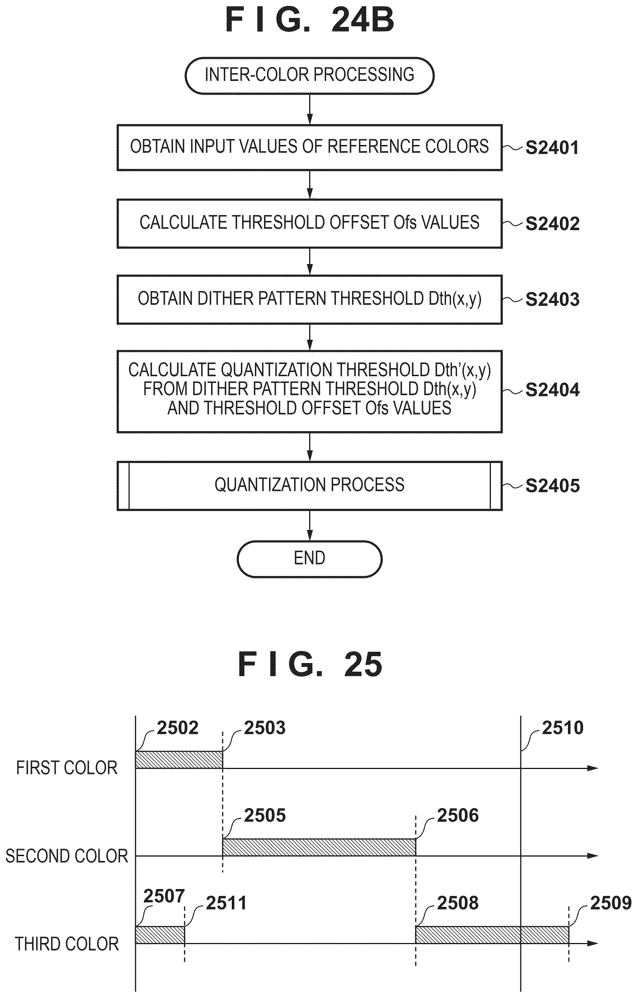

Next, a fifth embodiment will be described with reference to FIGS. 24A, 24B, and 25. In the fourth embodiment, when the supplied power is low, a "dot arrangement with high dispersibility" is realized by switching the dither pattern, but a form of realizing a similar dot arrangement by another method will be described. FIGS. 24A and 24B are diagrams for describing the details of the quantization process of step S605 of FIG. 17 according to the fifth embodiment. FIG. 24A is a block diagram for describing the quantization process including a preprocess, and the processing steps are illustrated in FIG. 24B. Since the hardware configuration and the like of the printing apparatus 1000 according to the fifth embodiment are the same as those of the above first embodiment, the description thereof will be omitted.

In FIG. 24A, processing target data is indicated as In1(x, y), and reference data is indicated as In2(x, y) and In3(x, y). Here, (x, y) indicates a pixel position and is a coordinate parameter for a threshold obtaining module 2405 to select a threshold corresponding to the pixel position of the processing target data from the threshold matrix.

In step S2404 of FIG. 24B, data converted into a signal value for each ink color is set to In1(x, y), In2(x, y), and In3(x, y). The colors for which higher dispersibility is desired are set to In2(x, y) and In3(x, y), and the other colors are set to In1(x, y). According to the fourth embodiment, data for C ink and data for M ink are set in In2(x, y) and In3(x, y), respectively. In1(x, y) is data for one color for convenience, but may be for a plurality of colors. Further, in a case that the supplied power is large and a dot arrangement with high dispersibility is not necessary, it is sufficient to input each color in In1(x, y) and perform the processing independently.

First, in step S2401, the pieces of reference data In2(x, y) and In3(x, y) inputted into an inter-color processing module 2404 are inputted into a threshold offset calculation module 2408. Next, in step S2402, the threshold offset calculation module 2408 calculates a threshold offset Ofs_1(x, y) for the processing target data In1(x, y) using these pieces of reference data. In the fifth embodiment, the threshold offset Ofs_1(x, y) is calculated by the following Equation (1).

$$\mathrm{Ofs\_1}(x, y) \ = \ \sum_i(\mathrm{In}i(x, y)) \ldots \text{Equation (1)}$$

Here, i is a parameter for individually illustrating the reference data (hereinafter referred to as the actual reference data) used to obtain a threshold for the processing target data In1 among the pieces of reference data In2(x, y) and In3(x, y). The number and type of such actual reference data are designated in advance for each piece of processing target data.

In this example, when the processing target data is In1(x, y), the actual reference data is set to null, and when processing target data is set to In2(x, y), the actual reference data is In1(x, y). In addition, when the processing target data is In3(x, y), the actual reference data is set to In1(x, y) and In2(x, y). Therefore, the offsets Ofs_1(x, y) to Ofs_3(x, y) for respective pieces of processing target data In1(x, y) to In3(x, y) can be expressed as follows based on the above Equation (1).

$$\mathrm{Ofs\_1}(x, y) \ = \ \sum_i\big(\mathrm{In}(x, y)\big) = 0 \ldots \text{Equation (1-1)}$$

$$\mathrm{Ofs\_2}(x, y) \ = \ \sum_i(\mathrm{In}(x, y)) \ = \ \mathrm{In}1(x, y) \ldots \text{Equation (1-2)}$$

$$\mathrm{Ofs\_3}(x, y) \ = \ \sum_i(\mathrm{In}(x, y)) = \mathrm{In}1(x, y) \ + \ \mathrm{In}2(x, y) \ldots \text{Equation (1-3)}$$

When the threshold offsets Ofs_1(x, y) to Ofs_3 (x,y) are thus calculated, these are inputted to a threshold offset addition module 2409. In step S2403, the threshold offset addition module 2409 obtains a threshold Dth corresponding to the coordinates (x, y) of the processing target data In(x, y) from the threshold obtaining module 2405.

Next, the processing proceeds to step S2404, and the threshold offset addition module 2409 subtracts the threshold offset Ofs_1(x, y) inputted from the threshold offset calculation module 2408 from the threshold Dth(x, y) inputted from the threshold obtaining module 2405 to obtain a quantization threshold Dth'(x, y).

$$Dth'(x, y) = Dth(x, y) - Ofs\_1(x, y) \ldots \text{Equation (2)}$$

At this time, if Dth'(x, y) becomes a negative value, Dth_max (maximum value of the threshold that the dither pattern has) is added to obtain the quantization threshold Dth'(x, y). Thus, the quantization threshold Dth' will always be Dth' = 0 to Dth_max.

That is,

$$\text{If Dth'(x, y) < 0,}$$

$$Dth'(x, y) = Dth'(x, y) + Dth\_max \ldots \text{Equation (3)}$$

When the quantization threshold Dth'(x, y) is obtained by the above Equation (2) or Equation (3), a quantization processing module 2406 compares the processing target data In1(x, y) and the quantization threshold Dth'(x, y) and determines whether to record (1) or not record (0) a dot at the pixel position (x, y). This concludes the processing.

FIG. 25 is a diagram illustrating a range of thresholds that are determined as recording (1) among a plurality of thresholds 0 to Dth_max arranged in the threshold matrix when first multi-valued data to third multi-valued data (In1 ~In3) are inputted for each of the first to third colors. The horizontal axis represents the threshold Dth from 0 to 4094, and reference numeral 2510 represents Dth_max (maximum value of the threshold that the dither pattern has). Each horizontal line indicates a range of thresholds for which dots are placed. In this example, for the first color, Ofs_1 = 0 according to Equation (1-1). Therefore, pixel positions corresponding to thresholds from 0 to In1 indicated by reference numerals 2502 and 2503 are set to recording (1), among 0 to Dth_max.

For the second color, Ofs_2 = In1 according to Equation (1-2). Therefore, when quantized using the threshold Dth obtained according to Equation (2) and Equation (3), thresholds from In1 to In1 + In2 indicated by reference numerals 2505 and 2506 are set to recording (1), among thresholds 0 to Dth_max arranged in the dither pattern.

For the third color, Ofs_3 = In1 + In2 according to Equation (1-3). Therefore, when quantized using the threshold Dth obtained according to Equation (2) and Equation (3), (In1 + In2) to (In1 + In2 + In3) indicated by reference numerals 2508 and 2509 are set to recording (1), among thresholds 0 to Dth_max arranged in the threshold matrix. However, in this example, it is assumed that (In1 + In2 + In3) exceeds Dth_max. In this case, for the region exceeding DTh_max, the region corresponding to a remainder after subtracting DTh_max from (In1 + In2 + In3), that is, threshold from 0 to (In1 + In2 + In3 - Dth_max) is set to recording (1). That is, a range of thresholds determined as recording (1) is (In1 + In2 to DTh_max) indicated by reference numerals 2508 and 2509 and 0 to (In1 + In2 + In3 - Dth_max) indicated by reference numerals 2507 and 2511.

As described above, in typical inter-color processing, although a common threshold matrix is used, a unique quantization threshold Dth' is obtained for each color by using each other's input values as offset values. Then, the newly obtained quantization threshold Dth' is used in the quantization process. Thus, different pixel arrangements become possible for C ink and M ink, and as a result, it is possible to realize a dot arrangement with high dispersibility that exhibits the effects of the fifth embodiment. Thus, by using this method, it is possible to realize dot arrangement with different dispersibilities even through a method different from dither matrix switching as in the fourth embodiment is used.

As described above, according to the fifth embodiment, similar to the fourth embodiment, by reducing an amount of printing in steps in accordance with the supplied power to prevent a reduction in printing speed and achieve a dot arrangement with high dispersibility, it is possible to prevent a reduction in image density and color development caused by thinning printing.

In FIGS. 24A, 24B, and 25 above, a quantization method that uses a dither matrix is used to realize dot arrangements with different dot dispersibilities, but this method is common to known methods for controlling granularity in dithering. Quantization methods for controlling granularity are disclosed not only in dithering but also in error diffusion methods. Needless to say, using these known quantization methods makes it possible to realize dot arrangements with different dispersibilities, as in the fifth embodiment.

Further, in the fourth and fifth embodiments, a case where two colors, C ink and M ink, are the control targets of dot dispersibility has been described, but this is not intended to be limiting. The dot dispersibility control target colors may be three colors of ink, or there may be a plurality of sets, in which two colors form a set, with dot dispersibility control performed between colors of the same set. For example, a first ink set may be set as C ink and M ink, and a second ink set may be set as Y ink and K ink. Furthermore, different quantization methods may be used for the first ink set and the second ink set. For example, combinations such as control based on the dither pattern of the fourth embodiment for the first ink set, and the dither method of the fifth embodiment for the second ink set, may be used, or error diffusion and dithering may be combined. The intention of the fifth embodiment is to make it possible to realize dot arrangements with different dot dispersibilities through these combinations. As a result, by reducing the amount of printing in steps in accordance with the supplied power to prevent a reduction in printing speed and achieve a dot arrangement with high dispersibility, it is possible to prevent a reduction in image density and color development caused by thinning printing.

(Sixth Embodiment)

Next, a sixth embodiment will be described. In the sixth embodiment, multi-valued quantization is performed in the quantization process of step S605 of FIG. 17, and the print dot pattern is determined in accordance with the multi-valued levels in the dot pattern rendering process of step S1702. Cases where such multi-valued quantization is used are often those in which the printed dot droplets are small and high-definition image formation relative to the quantization resolution is possible. Since the hardware configuration and the like of the printing apparatus 1000 according to the sixth embodiment are the same as those of the above first embodiment, the description thereof will be omitted.

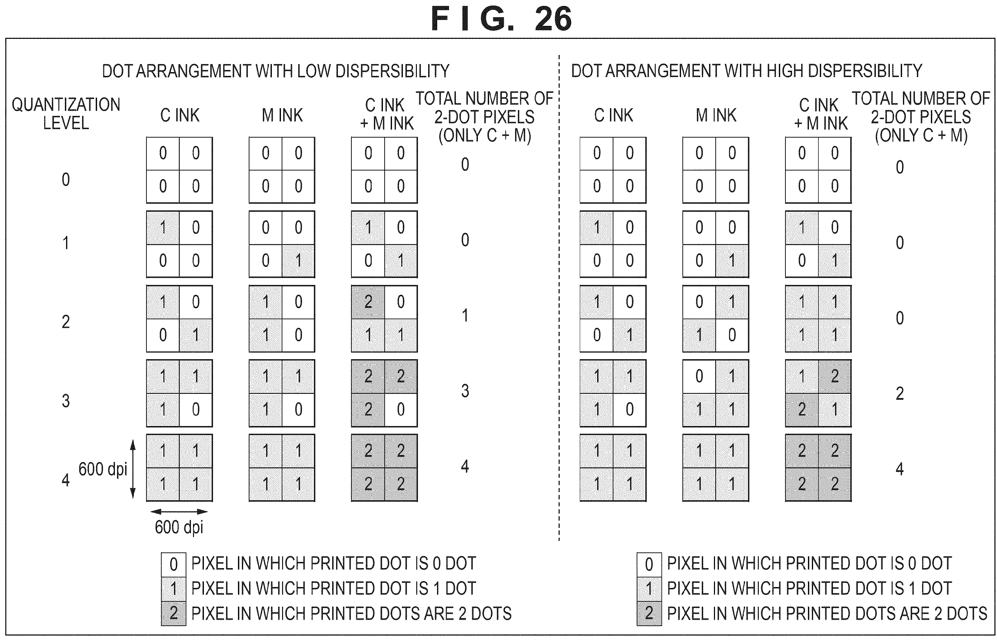

FIG. 26 depicts a view illustrating an example of a dot rendering method according to the sixth embodiment. In FIG. 26, a dot arrangement for each output level of the quantization process of step S605 is illustrated. This is the case where the quantization resolution is 600 dpi and the output values are at 5 levels, and the configuration allows dot arrangement in 1200 dpi units. Similar to the description of dot arrangements in the fourth embodiment, the dot arrangements for only C ink, only M ink, and C + M inks are indicated, and likewise, the numerical values of each pixel indicate the number of printed dots. In each single ink color dot arrangement, the dispersibility remains unchanged. In the dot arrangement for C ink + M ink, it can be seen that compared to a lower dot arrangement, particularly at quantization levels 2 and 3, a dot arrangement with high dispersibility differs in the number of pixels with two printed dots, and that the occurrence frequency of two-dot pixels is higher in the dot arrangement with low dispersibility.

In the dot pattern rendering process of step S1702, by switching the dot pattern for the same quantization level in accordance with the supplied power, it is possible to control dispersibility, as in the fourth and fifth embodiments. Similarly to the fourth and fifth embodiments, by reducing an amount of printing in steps in accordance with the supplied power to prevent a reduction in printing speed and achieve a dot arrangement with high dispersibility, it is possible to prevent a reduction in image density and color development caused by thinning printing.

By combining the dot arrangement dispersibility control method capable of realizing different levels of dot dispersibility in the sixth embodiment and the dot arrangement dispersibility control method in the fourth and fifth embodiments, it becomes possible to perform finer control than the two-level (high/low) dispersibility of FIG. 18, and as a result, it is possible to realize more optimal prevention of a reduction in image density and color development caused by thinning printing in accordance with the supplied power.

(Other Embodiments)

Embodiments of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer-executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1. A printing apparatus (1000) operable by receiving power supply from a device connected via a wired connection, the printing apparatus comprising:

   first determining means (S504) for determining a power supply level of the power supply;
   setting means (S506) for setting a printing mode based on the power supply level determined by the first determining means; and
   control means (S507) for controlling printing based on the printing mode set by the setting means.

2. The printing apparatus according to claim 1, further comprising:

   second determining means (S501) for determining a standard of an interface of the wired connection,
   wherein the first determining means determines a power supply level indicating a state of power supply from the interface,
   wherein the setting means sets the printing mode based on the standard of the interface determined by the second determining means and the power supply level determined by the first determining means.

3. The printing apparatus according to claim 2, further comprising:

   charging means (204) for being charged by power supply from the interface,
   wherein the second determining means determines the power supply level based on a voltage value outputted from the charging means.

4. The printing apparatus according to claim 2 or 3, wherein the setting means sets a threshold corresponding to the standard of the interface (S502), and sets the printing mode based on a comparison between the power supply level and the threshold (S506).

5. The printing apparatus according to any one of claims 2 to 4, further comprising:

   selecting means for presenting a plurality of printing modes to a user and for causing the user to make a selection, in a case where there are the plurality of printing modes that is able to be selected,
   wherein, in a case where the plurality of printing modes that is able to be selected based on the standard of the interface and the power supply level, the setting means sets a printing mode selected by the user.

6. The printing apparatus according to any one of claims 2 to 5, further comprising:

   initial setting means (901) for setting a printing mode to be prioritized as an initial setting,
   wherein the setting means sets the printing mode to be prioritized based on the standard of the interface and the power supply level.

7. The printing apparatus according to any one of claims 2 to 6, further comprising:

   an inkjet head; and
   scanning means for causing the inkjet head to scan,
   wherein the printing mode is a mode in which at least one among the number of nozzles of the inkjet head used for printing and a scanning speed of the inkjet head by the driver is controlled.

8. The printing apparatus according to claim 7, wherein the printing mode includes a first printing mode in which all nozzles of the inkjet head are used and further, printing is executed with the scanning speed being a speed based on an initial setting.

9. The printing apparatus according to claim 7 or 8, wherein the printing mode includes a second printing mode in which the number of nozzles of the inkjet head used for printing is reduced and further, printing is executed with the scanning speed being a speed based on an initial setting.

10. The printing apparatus according to any one of claims 7 to 9, wherein the printing mode includes a third printing mode in which the number of nozzles of the inkjet head used in one pass is reduced, and further, printing is executed with the scanning speed being a speed based on an initial setting and in multiple passes.

11. The printing apparatus according to any one of claims 7 to 10, wherein the printing mode includes a fourth printing mode in which all nozzles of the inkjet head are used and further, printing is executed with the scanning speed being lower than a speed based on an initial setting.

12. The printing apparatus according to claim 5, further comprising:

storage means for storing a selectable printing mode in association with the standard of the interface and the power supply level,
wherein the selection means references the storage means and obtains the selectable printing mode.

13. The printing apparatus according to claim 12, further comprising:

an inkjet head as a print head,
wherein the selectable printing mode is a printing mode in which at least a power supply level that allows the inkjet head to be capped after printing ends can be ensured.

14. The printing apparatus according to any one of claims 2 to 13, wherein the standard of the interface includes USB Type-C.

15. The printing apparatus according to claim 2, wherein the setting means sets a first printing mode in a case where the power supply level is a first power supply level, sets a second printing mode in a case where the power supply level is a second power supply level which is lower than the first power supply level, and sets a third printing mode in a case where the power supply level is a third power supply level which is lower than the second power supply level.

16. The printing apparatus according to claim 15, wherein the first printing mode is a printing mode in which all nozzles of a print head can be used in one pass and printing can be executed with a scanning speed of the print head being a speed based on an initial setting, and the second printing mode and the third printing mode are printing modes in which compared to the first printing mode, the number of nozzles used in one pass is reduced, or the number of nozzles used in one pass is reduced and printing is executed in multiple passes.

17. The printing apparatus according to claim 16 or 15, wherein the third printing mode is a printing mode in which compared to the second printing mode, the number of nozzles used in one pass is reduced, or printing is executed with an increased number of passes.

18. The printing apparatus according to claim 16 or 15, wherein in a case of a density maintaining type in which printing is executed at a density that can be printed in the first printing mode, the control means performs control such that in the second printing mode and the third printing mode, the number of nozzles used in one pass is set to (1/(integer)) of a total number of nozzles and printing is executed in multiple passes corresponding to the integer.

19. The printing apparatus according to claim 16 or 15, wherein, in a case of a speed maintaining type in which printing is executed at the speed based on the initial setting, in the control, the control means performs control such that in the second printing mode and the third printing mode, printing is executed with a ratio of number of dots printed per unit area of an image reduced.

20. The printing apparatus according to any one of claims 1 to 19, further comprising:

receiving means for receiving power supply information indicating power supplied by the device,
wherein the setting means sets a printing mode in which a print dot arrangement is changed in accordance with the power supply information,
wherein, in a case where the power supply information is a first level, the setting means sets the printing mode in which a dot arrangement in which print dot dispersibility is increased compared to a case where the power supply information is a second level, which is higher than the first level.

21. The printing apparatus according to claim 20, wherein, in a case of changing the print dot arrangement, the setting means executes at least one of a quantization process and a dot pattern rendering process.

22. The printing apparatus according to claim 21, wherein the quantization process includes at least one of dithering and an error diffusion method.

23. The printing apparatus according to claim 20, wherein the setting means changes print dot arrangement for at least two colors of ink colors.

24. The printing apparatus according to claim 20, wherein, in a case where the power supply information is the first level, the setting means reduces a printing duty on a paper surface compared to a case where the power supply information is the second level.

25. The printing apparatus according to any one of claims 20 to 24, wherein the receiving means receives at least two levels of power supply information.

26. The printing apparatus according to any one of claims 20 to 25, wherein the wired connection is a USB connection.

27. The printing apparatus according to any one of claims 20 to 26, further comprising:
display means for displaying a state of change of a print dot arrangement on the display unit.

28. The printing apparatus according to claim 27, wherein the display means further displays the power supply information.

29. A method of controlling a printing apparatus operable by power supply from an interface while being connected by a wired connection via the interface, the method comprising:

determining (S501) a standard of the interface;
determining (S504) a power supply level indicating a state of power supply from the interface;
setting (S506) a printing mode based on the determined standard of the interface and the determined power supply level; and
executing (S507) printing in accordance with a print job based on the set printing mode.

30. A method of controlling a printing apparatus operable by receiving power supply from a device connected via a wired connection, the method comprising:

determining (S504) a power supply level of the power supply; and
performing (S505) control so as to set a printing mode based on the determined power supply level and execute (S507) printing,
wherein, in the control, printing is executed in a first printing mode in a case where the power supply level is a first power supply level (S1402), printing is executed in a second printing mode in a case where the power supply level is a second power supply level which is lower than the first power supply level (S1404), and printing is executed in a third printing mode in a case where the power supply level is a third power supply level which is lower than the second power supply level (S1405).

# FIG. 1A

1000

PRINT PAPER

192

191

PAPER FEED
DIRECTION

# FIG. 1B

1000

CONTROL UNIT

100

130

110

**PRINTER UNIT**

| HEAD DRIVING UNIT |

| CR MECHANISM |
| LF MECHANISM |

101
CPU

104
ENGINE I/F

102
RAM

109

103
ROM

105
OPERATION
UNIT I/F

111
OPERATION
UNIT

106
NETWORK I/F

112
HOST PC

107
USB I/F

120
SMART DEVICE

108
POWER SUPPLY
BOARD I/F

# F I G. 2

# F I G. 3

| | STANDARD NAME | CURRENT VALUE (WHEN 5V) | MAXIMUM POWER | HOST SIDE CONNECTOR SHAPE |
|---|---|---|---|---|
| BC1.2 | USB2.0 | 0.5A | 2.5W | Type-A |
| | USB3.1 | 0.9A | 4.5W | Type-A |
| | CHARGING USB PORT (CDP) | 1.5A | 7.5W | Type-A |
| Type-C | Type-C STANDARD | 1.5A | 7.5W | Type-C |
| | Power Delivery 2.0 | 2.0A | 10W | Type-C |
| | Power Delivery 3.0 | 3.0A | 15W | Type-C |

# F I G. 4A

| STANDARD NAME | | CURRENT VALUE (WHEN 5V) | EDLC THRESHOLD VOLTAGE |
|---|---|---|---|
| | | | THRESHOLD 1 |
| BC1.2 | USB2.0 | 0.5A | 10% |
| | USB3.1 | 0.9A | |
| | CDP | 1.5A | |
| Type-C | Type-C STANDARD | | |
| | Power Delivery 2.0 | 2.0A | |
| | Power Delivery 3.0 | 3.0A | |

# F I G. 4B

| STANDARD NAME | | CURRENT VALUE (WHEN 5V) | SET PRINTING MODE | |
|---|---|---|---|---|
| | | | Vbat ≤ THRESHOLD 1 | THRESHOLD 1 < Vbat |
| BC1.2 | USB2.0 | 0.5A | - | - |
| | USB3.1 | 0.9A | - | - |
| | CDP | 1.5A | - | - |
| Type-C | Type-C STANDARD | | - | PRINTING MODE 3 |
| | Power Delivery 2.0 | 2.0A | - | PRINTING MODE 2 |
| | Power Delivery 3.0 | 3.0A | - | PRINTING MODE 1 |

# F I G. 5

```
                          START

                            │
                            ▼
              ┌──────────────────────────────┐
              │  DETERMINE USB STANDARD       │──S501
              └──────────────────────────────┘
                            │
                            ▼
              ┌──────────────────────────────┐
              │  SET THRESHOLD FOR Vbat VOLTAGE│──S502
              └──────────────────────────────┘
                            │
                            ▼
              ┌──────────────────────────────┐
              │  DETECT Vbat VOLTAGE          │──S503
              └──────────────────────────────┘
                            │
                            ▼
                        ╱S504
              ╱─────────────────────╲
             ╱  Vbat VOLTAGE >       ╲   NO
             ╲  THRESHOLD 1?         ╱──────────┐
              ╲─────────────────────╱           │
                    │ YES                        │
                    ▼  S505                       │  S509
  ┌──────────────────────────────┐   ┌──────────────────────────────┐
  │ DISPLAY UI FOR SELECTING PRINTING│ NOTIFY OF INSUFFICIENT POWER  │
  │ MODE AND ACCEPT USER INPUT     │   └──────────────────────────────┘
  └──────────────────────────────┘           │
                    │                          │
                    ▼                          │
  ┌──────────────────────────────┐            │
  │  SET PRINTING MODE            │──S506      │
  └──────────────────────────────┘            │
                    │                          │
                    ▼                          │
  ┌──────────────────────────────┐            │
  │  EXECUTE SET PRINT PROCESS    │──S507      │
  └──────────────────────────────┘            │
                    │                          │
                    ▼                          │
  ┌──────────────────────────────┐            │
  │  PRINT END OPERATION          │──S508      │
  └──────────────────────────────┘            │
                    │                          │
                    ▼◄─────────────────────────┘

                          END
```

# F I G. 6

```
┌─────────────────────────────────┐
│         INPUT PROCESS           │ ∿ S601
└─────────────────────────────────┘
                                              ∿ S602
┌───────────────────────────────────────────────┐
│                   │                            │
│  ┌─────────────────────────────────┐           │
│  │ INPUT COLOR CONVERSION PROCESS  │ ∿ S603    │
│  └─────────────────────────────────┘           │
│                   │                            │
│  ┌─────────────────────────────────┐           │
│  │  INK COLOR CONVERSION PROCESS   │ ∿ S604    │
│  └─────────────────────────────────┘           │
│                   │                            │
│  ┌─────────────────────────────────┐           │
│  │      QUANTIZATION PROCESS       │ ∿ S605    │
│  └─────────────────────────────────┘           │
│                   │                            │
│  ┌─────────────────────────────────┐           │
│  │   PATH DECOMPOSITION PROCESS    │ ∿ S606    │
│  └─────────────────────────────────┘           │
│                   │                            │
└───────────────────────────────────────────────┘
┌─────────────────────────────────┐
│        OUTPUT PROCESS           │ ∿ S607
└─────────────────────────────────┘
```

# FIG. 7A

| SUPPLIED POWER | FIRST | SECOND | |
|---|---|---|---|
| PRINTING MODE | PRINTING MODE 1 | PRINTING MODE 2 | PRINTING MODE 3 |
| PRINTING METHOD | CR MOVEMENT DIRECTION / DISCHARGE NOZZLE ARRAY DIRECTION / 100% | CR MOVEMENT DIRECTION / DISCHARGE NOZZLE ARRAY DIRECTION / 50% | CR MOVEMENT DIRECTION / DISCHARGE NOZZLE ARRAY DIRECTION / 50% |

# FIG. 7B

| SUPPLIED POWER | FIRST | SECOND | |
|---|---|---|---|
| PRINTING MODE | PRINTING MODE 1 | PRINTING MODE 2 | PRINTING MODE 3 |
| PRINTING METHOD | CR MOVEMENT DIRECTION DISCHARGE NOZZLE ARRAY DIRECTION / 100% | CR MOVEMENT DIRECTION / CR MOVEMENT SPEED HALVED DISCHARGE NOZZLE ARRAY DIRECTION / 100% | CR MOVEMENT DIRECTION DISCHARGE NOZZLE ARRAY DIRECTION / 50% |

EP 4 723 610 A1

# FIG. 8

**801 — VARIOUS SETTINGS 1**

- PRINT SETTINGS ☐
- LAN SETTINGS ☐
- BASIC SETTINGS FOR MAIN BODY ☐
- POWER SETTINGS ☑

MENU TRANSITION →

**802 — VARIOUS SETTINGS 2**

- CONNECTED TO AC MAIN POWER SUPPLY ☐
- 803 — AT TIME OF POWER SUPPLY FROM USB Type-C ☑

MENU TRANSITION →

**804 — DETAILED SETTINGS**

- IMAGE DENSITY PRIORITY ☑
- SPEED PRIORITY ☐

MENU TRANSITION →

**805 — DETAILED SETTINGS**

- IMAGE DENSITY PRIORITY ☐
- SPEED PRIORITY ☑

EP 4 723 610 A1

# FIG. 9

901
SETTINGS AT TIME OF INITIAL INSTALLATION

SET COUNTRY OF USE/ REGION OF USE

JAPAN ⇕

OK

MENU TRANSITION

902
SETTINGS AT TIME OF INITIAL INSTALLATION

SET CURRENT TIME

2024/1/1 12:00 ⇕

OK

MENU TRANSITION

903
SETTINGS AT TIME OF INITIAL INSTALLATION

IMAGE DENSITY PRIORITY ☐

SPEED PRIORITY ✓

EP 4 723 610 A1

**F I G. 10**

```
                    ┌──────────────┐
                    │    START     │
                    └──────┬───────┘
                           │
          ┌────────────────▼────────────────┐
          │   DETERMINE USB STANDARD        │──S501
          └────────────────┬────────────────┘
                           │
          ┌────────────────▼────────────────┐
          │  SET THRESHOLD FOR Vbat VOLTAGE │──S502
          └────────────────┬────────────────┘
                           │
          ┌────────────────▼────────────────┐
          │     DETECT Vbat VOLTAGE         │──S503
          └────────────────┬────────────────┘
                           │
                           ▼          S504
                    ◇─────────────◇      NO
                    Vbat VOLTAGE >  ──────────┐
                    THRESHOLD 1?              │
                    ◇─────────────◇           │
                        │ YES                 ▼                    S509
                        │              ┌─────────────────────────────┐
                        │              │ NOTIFY OF INSUFFICIENT POWER │
                        ▼     S1001    └──────────────┬──────────────┘
                    ◇─────────────◇  YES              │
                    PRIORITY PRINTING ───────┐        │
                    MODE PRESENT?             │        │
                    ◇─────────────◇          ▼        │      S1002
                        │ NO         ┌─────────────────────────┐
                        │            │ SET PRIORITY PRINTING MODE│
                        ▼    S505    └──────────┬──────────────┘
          ┌────────────────────────────┐       │
          │ DISPLAY UI FOR SELECTING   │       │
          │ PRINTING MODE AND ACCEPT   │       │
          │ USER INPUT                 │       │
          └──────────┬─────────────────┘       │
                     ▼                         │
          ┌────────────────────────┐           │
          │   SET PRINTING MODE    │──S506      │
          └──────────┬─────────────┘           │
                     │◄────────────────────────┘
                     ▼
          ┌────────────────────────┐
          │ EXECUTE SET PRINT PROCESS│──S507
          └──────────┬─────────────┘
                     ▼
          ┌────────────────────────┐
          │  PRINT END OPERATION   │──S508
          └──────────┬─────────────┘
                     ▼
              ┌──────────────┐
              │     END      │
              └──────────────┘
```

# F I G. 11

DISCHARGE MECHANISM

**1102**
CR MOTOR

FORWARD OPERATION
BACKWARD OPERATION

C M Y K    **1101**    **1103**

**1104**
CAPPING MECHANISM

PAPER FEED MOTOR

EP 4 723 610 A1

## F I G. 12A

DENSITY MAINTAINING TYPE

| SUPPLIED POWER | FIRST | SECOND | THIRD |
|---|---|---|---|
| PRINTING MODE | PRINTING MODE 1 | PRINTING MODE 2 | PRINTING MODE 3 |
| PRINTING METHOD | CR MOVEMENT DIRECTION → 100% DISCHARGE NOZZLE ARRAY DIRECTION | CR MOVEMENT DIRECTION → 50% DISCHARGE NOZZLE ARRAY DIRECTION | CR MOVEMENT DIRECTION → 25% DISCHARGE NOZZLE ARRAY DIRECTION |

## F I G. 12B

SPEED MAINTAINING TYPE

| SUPPLIED POWER | FIRST | SECOND | THIRD |
|---|---|---|---|
| PRINTING MODE | PRINTING MODE 1 | PRINTING MODE 2 | PRINTING MODE 3 |
| PRINTING METHOD | CR MOVEMENT DIRECTION → 100% DISCHARGE NOZZLE ARRAY DIRECTION | CR MOVEMENT DIRECTION → 50% DISCHARGE NOZZLE ARRAY DIRECTION | CR MOVEMENT DIRECTION → 25% DISCHARGE NOZZLE ARRAY DIRECTION |

EP 4 723 610 A1

FIG. 12C

MODIFICATION OF DENSITY MAINTAINING TYPE

| SUPPLIED POWER | FIRST | SECOND | THIRD |
|---|---|---|---|
| PRINTING MODE | PRINTING MODE 1 | PRINTING MODE 2 | PRINTING MODE 3 |
| PRINTING METHOD | 100% | 50% | 50% |

CR MOVEMENT DIRECTION

DISCHARGE NOZZLE ARRAY DIRECTION

FIG. 12D

MODIFICATION OF SPEED MAINTAINING TYPE

| SUPPLIED POWER | FIRST | SECOND | THIRD |
|---|---|---|---|
| PRINTING MODE | PRINTING MODE 1 | PRINTING MODE 2 | PRINTING MODE 3 |
| PRINTING METHOD | 100% | 50% | 50% |

CR MOVEMENT DIRECTION

DISCHARGE NOZZLE ARRAY DIRECTION

EP 4 723 610 A1

# F I G. 13

| | PRINTING MODE 1 | PRINTING MODE 2 | PRINTING MODE 3 |
|---|---|---|---|
| DENSITY PRIORITY MODE | DENSITY 100% | DENSITY 80% | DENSITY 63% |
| | DENSITY 100% | DENSITY 63% | DENSITY 40% |
| SPEED PRIORITY MODE | DENSITY 100% | DENSITY 63% | DENSITY 40% |
| | DENSITY 100% | DENSITY 80% | DENSITY 63% |

# F I G. 14

# F I G. 15

| STANDARD NAME | | CURRENT VALUE (WHEN 5V) | DOT ARRANGEMENT CONTROL METHOD |
|---|---|---|---|
| BC1.2 | USB2.0 | 0.5A | DOT ARRANGEMENT CONTROL 4 |
| | USB3.1 | 0.9A | DOT ARRANGEMENT CONTROL 3 |
| | CDP | 1.5A | DOT ARRANGEMENT CONTROL 2 |
| Type-C | Type-C STANDARD | | DOT ARRANGEMENT CONTROL 2 |
| | Power Delivery 2.0 | 2.0A | DOT ARRANGEMENT CONTROL 2 |
| | Power Delivery 3.0 | 3.0A | DOT ARRANGEMENT CONTROL 1 |

# F I G. 16

START

DETERMINE USB STANDARD — S501

SET THRESHOLD FOR Vbat VOLTAGE — S502

DETECT Vbat VOLTAGE — S503

S504

Vbat VOLTAGE >
THRESHOLD 1?

NO

YES

SET DOT ARRANGEMENT CONTROL — S1601

NOTIFY OF INSUFFICIENT POWER — S509

SET PRINTING MODE — S506

EXECUTE SET PRINT PROCESS — S507

PRINT END OPERATION — S508

END

# F I G. 17

```
┌──────────────────────────────────────┐
│            INPUT PROCESS              │──S601
└──────────────────────────────────────┘
                    │
                    │                    ──S1701
    ┌───────────────▼──────────────────────────┐
    │  ┌──────────────────────────────────┐     │
    │  │   INPUT COLOR CONVERSION PROCESS  │──S603│
    │  └──────────────────────────────────┘     │
    │                 │                          │
    │  ┌──────────────▼───────────────────┐     │
    │  │    INK COLOR CONVERSION PROCESS   │──S604│
    │  └──────────────────────────────────┘     │
    │                 │                          │
    │  ┌──────────────▼───────────────────┐     │
    │  │        QUANTIZATION PROCESS       │──S605│
    │  └──────────────────────────────────┘     │
    │                 │                          │
    │  ┌──────────────▼───────────────────┐     │
    │  │   DOT PATTERN RENDERING PROCESS   │──S1702│
    │  └──────────────────────────────────┘     │
    │                 │                          │
    │  ┌──────────────▼───────────────────┐     │
    │  │     PATH DECOMPOSITION PROCESS    │──S606│
    │  └──────────────────────────────────┘     │
    └───────────────┬──────────────────────────┘
                    │
    ┌───────────────▼──────────────────────┐
    │            OUTPUT PROCESS             │──S607
    └──────────────────────────────────────┘
```

# F I G. 18

| | INK COLOR CONVERSION PROCESS THINNING AMOUNT (%) | QUANTIZATION PROCESS DITHER SETTING | |
|---|---|---|---|
| DOT ARRANGEMENT CONTROL 1 | 100% | NORMAL (DISPERSIBILITY: LOW) | ↑ LARGE |
| DOT ARRANGEMENT CONTROL 2 | 50% | DISPERSIBILITY: HIGH | |
| DOT ARRANGEMENT CONTROL 3 | 37.5% | DISPERSIBILITY: HIGH | SUPPLIED POWER |
| DOT ARRANGEMENT CONTROL 4 | 25% | DISPERSIBILITY: HIGH | ↓ SMALL |

# F I G. 19

C INK — 1901, M INK — 1902, C INK + M INK — 1903 (DISPERSIBILITY: LOW)

C INK — 1904, M INK — 1905, C INK + M INK — 1906 (DISPERSIBILITY: HIGH)

| 0 | PIXEL IN WHICH PRINTED DOT IS 0 DOT |
| 1 | PIXEL IN WHICH PRINTED DOT IS 1 DOT |
| 2 | PIXEL IN WHICH PRINTED DOTS ARE 2 DOTS |

# F I G. 20

EP 4 723 610 A1

# FIG. 21A

25%Duty

| | IN CASE OF DOT ARRANGEMENT WITH LOW DISPERSIBILITY | | | IN CASE OF DOT ARRANGEMENT WITH HIGH DISPERSIBILITY | | |
|---|---|---|---|---|---|---|
| | ONLY C INK | ONLY M INK | C INK + M INK | ONLY C INK | ONLY M INK | C INK + M INK |
| TOTAL NUMBER OF PIXELS IN WHICH PRINTED DOT IS 0 DOT | 48 | 48 | 39 | 48 | 48 | 32 |
| TOTAL NUMBER OF PIXELS IN WHICH PRINTED DOT IS 1 DOT | 16 | 16 | 18 | 16 | 16 | 32 |
| TOTAL NUMBER OF PIXELS IN WHICH PRINTED DOTS ARE 2 DOTS | 0 | 0 | 7 | 0 | 0 | 0 |

# FIG. 21B

50%Duty

| | IN CASE OF DOT ARRANGEMENT WITH LOW DISPERSIBILITY | | | IN CASE OF DOT ARRANGEMENT WITH HIGH DISPERSIBILITY | | |
|---|---|---|---|---|---|---|
| | ONLY C INK | ONLY M INK | C INK + M INK | ONLY C INK | ONLY M INK | C INK + M INK |
| TOTAL NUMBER OF PIXELS IN WHICH PRINTED DOT IS 0 DOT | 32 | 32 | 17 | 32 | 32 | 9 |
| TOTAL NUMBER OF PIXELS IN WHICH PRINTED DOT IS 1 DOT | 32 | 32 | 30 | 32 | 32 | 46 |
| TOTAL NUMBER OF PIXELS IN WHICH PRINTED DOTS ARE 2 DOTS | 0 | 0 | 17 | 0 | 0 | 9 |

EP 4 723 610 A1

# F I G. 22

# F I G. 23A

# F I G. 23B

PRINTED DOT ARRANGEMENT
ON PAPER SURFACE

**2307**

**2308**

⊘ PRINTED DOT IMAGE FOR C INK

⊜ PRINTED DOT IMAGE FOR M INK

# F I G. 23C

| | | ONLY C INK | ONLY M INK | C INK + M INK |
|---|---|---|---|---|
| DOT ARRANGEMENT WITH LOW DISPERSIBILITY | TOTAL NUMBER OF PIXELS IN WHICH PRINTED DOT IS 0 DOT | 0 | 0 | 0 |
| | TOTAL NUMBER OF PIXELS IN WHICH PRINTED DOT IS 1 DOT | 1 | 1 | 0 |
| | TOTAL NUMBER OF PIXELS IN WHICH PRINTED DOTS ARE 2 DOTS | 0 | 0 | 1 |
| DOT ARRANGEMENT WITH HIGH DISPERSIBILITY | TOTAL NUMBER OF PIXELS IN WHICH PRINTED DOT IS 0 DOT | 0 | 0 | 0 |
| | TOTAL NUMBER OF PIXELS IN WHICH PRINTED DOT IS 1 DOT | 1 | 1 | 2 |
| | TOTAL NUMBER OF PIXELS IN WHICH PRINTED DOTS ARE 2 DOTS | 0 | 0 | 0 |

# F I G. 24A

EP 4 723 610 A1

# F I G. 24B

INTER-COLOR PROCESSING

OBTAIN INPUT VALUES OF REFERENCE COLORS — S2401

CALCULATE THRESHOLD OFFSET Ofs VALUES — S2402

OBTAIN DITHER PATTERN THRESHOLD Dth(x,y) — S2403

CALCULATE QUANTIZATION THRESHOLD Dth'(x,y) FROM DITHER PATTERN THRESHOLD Dth(x,y) AND THRESHOLD OFFSET Ofs VALUES — S2404

QUANTIZATION PROCESS — S2405

END

# F I G. 25

2502  2503  2510

FIRST COLOR

2505  2506

SECOND COLOR

2507  2511  2508  2509

THIRD COLOR

# FIG. 26

DOT ARRANGEMENT WITH LOW DISPERSIBILITY

DOT ARRANGEMENT WITH HIGH DISPERSIBILITY

QUANTIZATION LEVEL | C INK | M INK | C INK + M INK | TOTAL NUMBER OF 2-DOT PIXELS (ONLY C + M)

0 PIXEL IN WHICH PRINTED DOT IS 0 DOT
1 PIXEL IN WHICH PRINTED DOT IS 1 DOT
2 PIXEL IN WHICH PRINTED DOTS ARE 2 DOTS

EP 4 723 610 A1

# F I G. 27

EP 4 723 610 A1

**FIRST THRESHOLD MATRIX**

| 3219 | 7 | 649 | 2324 | 1431 | 230 | 1143 | 3913 | 866 | 3154 |
|------|------|------|------|------|------|------|------|------|------|
| 2398 | 1744 | 1209 | 2777 | 2025 | 3729 | 1682 | 2666 | 1497 | 1945 |
| 1503 | 3918 | 3005 | 3550 | 789 | 3214 | 525 | 3048 | 346 | 3490 |
| 1066 | 492 | 2526 | 157 | 1880 | 1043 | 2238 | 2465 | 3762 | 1012 |
| 815 | 3341 | 2182 | 1322 | 4017 | 3395 | 1387 | 43 | 2061 | 1757 |
| 1973 | 3782 | 1661 | 366 | 2677 | 657 | 3821 | 2821 | 812 | 2631 |
| 1166 | 2770 | 3135 | 962 | 2389 | 1783 | 2981 | 1582 | 3575 | 3127 |
| 635 | 67 | 1466 | 3609 | 3279 | 188 | 1087 | 450 | 1240 | 2165 |
| 1736 | 3887 | 2288 | 510 | 2082 | 3941 | 1929 | 2547 | 3327 | 120 |
| 2046 | 2573 | 890 | 2895 | 1303 | 741 | 3081 | 3666 | 2336 | 1670 |

**SECOND THRESHOLD MATRIX**

| 2504 | 1738 | 3814 | 303 | 2331 | 3916 | 2870 | 3677 | 1470 | 2659 |
|------|------|------|------|------|------|------|------|------|------|
| 3585 | 500 | 2175 | 876 | 3120 | 638 | 441 | 2487 | 8 | 1055 |
| 43 | 1189 | 3378 | 2739 | 1597 | 1973 | 1153 | 3355 | 1786 | 3076 |
| 1958 | 3012 | 1375 | 4035 | 150 | 3705 | 2958 | 2252 | 3956 | 706 |
| 830 | 2320 | 635 | 1820 | 2520 | 967 | 1342 | 268 | 1524 | 2766 |
| 3627 | 2649 | 3444 | 412 | 3221 | 2078 | 3526 | 585 | 2465 | 3767 |
| 3974 | 180 | 1135 | 1494 | 3831 | 773 | 2693 | 3158 | 1903 | 1097 |
| 2191 | 3100 | 2007 | 2852 | 2354 | 63 | 1679 | 4089 | 396 | 3449 |
| 1318 | 1712 | 667 | 3562 | 1020 | 3046 | 1229 | 2196 | 1456 | 809 |
| 3786 | 2577 | 295 | 3944 | 1862 | 516 | 3736 | 2567 | 201 | 3321 |

# F I G. 28

EP 4 723 610 A1

C INK

| | | | | | | | |
|---|---|---|---|---|---|---|---|
| 3328 | 2048 | 3008 | 576 | 2816 | 64 | 3072 | 1664 |
| 512 | 2560 | 896 | 3584 | 1792 | 1280 | 832 | 2368 |
| 1536 | 3776 | 1408 | 2176 | 4032 | 2624 | 3520 | 3840 |
| 3392 | 256 | 2944 | 192 | 1088 | 384 | 1984 | 640 |
| 1024 | 1856 | 2432 | 3712 | 3136 | 2304 | 2880 | 1152 |
| 448 | 2752 | 1216 | 704 | 1728 | 1472 | 3648 | 128 |
| 3200 | 2112 | 3904 | 3456 | 320 | 2688 | 768 | 3264 |
| 0 | 1600 | 960 | 2496 | 1920 | 3968 | 2240 | 1344 |

**DISPERSIBILITY LOW**

M INK

| | | | | | | | |
|---|---|---|---|---|---|---|---|
| 1664 | 576 | 2048 | 384 | 2688 | 192 | 1344 | 832 |
| 3584 | 2560 | 3904 | 1600 | 3328 | 1856 | 3456 | 2880 |
| 2304 | 1216 | 0 | 1024 | 3776 | 640 | 2176 | 1152 |
| 1472 | 2816 | 3200 | 1984 | 3008 | 256 | 2496 | 3648 |
| 4032 | 512 | 3520 | 2368 | 768 | 1536 | 3264 | 64 |
| 2112 | 1728 | 320 | 1280 | 3392 | 3968 | 1920 | 896 |
| 704 | 3136 | 3840 | 2240 | 128 | 2752 | 448 | 2432 |
| 2624 | 1408 | 960 | 2944 | 1792 | 1088 | 3712 | 3072 |

| | | | | | | | |
|---|---|---|---|---|---|---|---|
| 3392 | 640 | 2112 | 576 | 1600 | 3776 | 320 | 3008 |
| 2752 | 1536 | 0 | 2944 | 1280 | 3264 | 1472 | 2368 |
| 1664 | 1024 | 3712 | 896 | 2304 | 192 | 832 | 3584 |
| 512 | 3904 | 2624 | 3136 | 1984 | 3968 | 2816 | 64 |
| 2496 | 1920 | 1344 | 3456 | 384 | 1088 | 2240 | 1408 |
| 3648 | 256 | 2176 | 704 | 2432 | 3840 | 448 | 3328 |
| 3200 | 960 | 4032 | 2880 | 1792 | 768 | 3072 | 2560 |
| 2688 | 1728 | 1152 | 3520 | 128 | 2048 | 1216 | 1856 |

**DISPERSIBILITY HIGH**

| | | | | | | | |
|---|---|---|---|---|---|---|---|
| 1344 | 3392 | 832 | 3264 | 1152 | 3136 | 1280 | 3712 |
| 2304 | 2048 | 2752 | 320 | 3584 | 0 | 2368 | 448 |
| 128 | 3968 | 1856 | 2432 | 768 | 1792 | 2112 | 2880 |
| 2624 | 704 | 1216 | 1728 | 2944 | 512 | 4032 | 1664 |
| 1472 | 1920 | 3520 | 640 | 3648 | 2496 | 1088 | 3200 |
| 896 | 3008 | 256 | 2816 | 1408 | 2176 | 3456 | 64 |
| 3840 | 2560 | 2240 | 3328 | 1024 | 3072 | 1600 | 960 |
| 384 | 3776 | 576 | 1536 | 3904 | 192 | 2688 | 1984 |

| | Europäisches Patentamt |
|---|---|
| | European Patent Office |
| | Office européen des brevets |

# EUROPEAN SEARCH REPORT

**Application Number**

EP 25 20 6012

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 978641 B2 (SEIKO EPSON CORP) 24 August 2016 (2016-08-24) | 1,2,4-8, 11,12, 15,29,30 | INV. H04N1/00 B41J29/38 |
| Y | * paragraph [0014] - paragraph [0039]; claim 1; figures 1, 2 * | 3,9,10, 13,14, 16-19 | |
| A | | 20-28 | |
| | ----- | | |
| Y | JP 7 459662 B2 (BROTHER IND LTD) 2 April 2024 (2024-04-02) * paragraph [0020] - paragraph [0026] * | 3,14 | |
| | ----- | | |
| Y | JP 2004 034455 A (CANON KK) 5 February 2004 (2004-02-05) * page 2 - page 6 * | 9,10,16, 17,19 | |
| | ----- | | |
| Y | US 2015/094873 A1 (OHHASHI KENICHI [JP]) 2 April 2015 (2015-04-02) * paragraph [0032] * | 13 | |
| | ----- | | |
| Y | US 2018/141357 A1 (ASAI HITOSHI [JP]) 24 May 2018 (2018-05-24) * paragraph [0036]; figure 10 * | 18 | TECHNICAL FIELDS SEARCHED (IPC) |
| | ----- | | H04N B41J |

The present search report has been drawn up for all claims

| Place of search | Date of completion of the search | Examiner |
|---|---|---|
| The Hague | 2 February 2026 | De Meyer, Doris Anna |

EPO FORM 1503 03.82 (P04C01)

EP 4 723 610 A1

## ANNEX TO THE EUROPEAN SEARCH REPORT
## ON EUROPEAN PATENT APPLICATION NO.

EP 25 20 6012

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2026

| Patent document cited in search report | | Publication date | Patent family member(s) | | Publication date |
|---|---|---|---|---|---|
| JP 5978641 | B2 | 24-08-2016 | JP | 5978641 B2 | 24-08-2016 |
| | | | JP | 2013166294 A | 29-08-2013 |
| JP 7459662 | B2 | 02-04-2024 | JP | 7459662 B2 | 02-04-2024 |
| | | | JP | 2021187045 A | 13-12-2021 |
| | | | US | 2021377414 A1 | 02-12-2021 |
| JP 2004034455 | A | 05-02-2004 | NONE | | |
| US 2015094873 | A1 | 02-04-2015 | CN | 104512135 A | 15-04-2015 |
| | | | EP | 2853949 A1 | 01-04-2015 |
| | | | JP | 2015068989 A | 13-04-2015 |
| | | | US | 2015094873 A1 | 02-04-2015 |
| US 2018141357 | A1 | 24-05-2018 | CN | 108068477 A | 25-05-2018 |
| | | | JP | 6806540 B2 | 06-01-2021 |
| | | | JP | 2018079673 A | 24-05-2018 |
| | | | KR | 20180056368 A | 28-05-2018 |
| | | | US | 2018141357 A1 | 24-05-2018 |

EPO FORM P0459

For more details about this annex : see Official Journal of the European Patent Office, No. 12/82

49

**EP 4 723 610 A1**

**Patent documents cited in the description**

- JP 2004034455 A
- JP 2003251893 A
- JP 2023045997 A
- JP 2004 A
- JP 34455 A